# EUROPEAN PATENT SPECIFICATION

(11) **EP 4 034 440 B1**
(45) Date of publication and mention of the grant of the patent: **18.02.2026**
(21) Application number: 20786186.5
(22) Date of filing: 21.09.2020
(51) Int. Cl.: B60W 30/095, G08G 1/16, B62D 15/02

(54) **BLOCKING OBJECT AVOIDANCE**
VERMEIDUNG VON BLOCKIERENDEN OBJEKTEN
ÉVITEMENT D'OBJET PROVOQUANT UNE OBSTRUCTION

(30) Priority: 27.09.2019 US 201916586604
(43) Date of publication of application: 03.08.2022
(60) Divisional application: 25223345.7
(73) Proprietor: Zoox, Inc., Foster City, CA 94404 (US)
(72) Inventor: BELLER, Andrew E., Foster City, CA 94404 (US)
(74) Representative: Harden, Henry Simon
(86) International application number: PCT/US2020/051797
(87) International publication number: WO 2021/061568

(56) References cited:
- DE-A1- 102010 012 954
- DE-A1- 102010 012 954
- US-A1- 2015 210 311
- US-A1- 2015 210 311
- US-A1- 2018 326 982
- US-A1- 2018 326 982
- US-A1- 2019 072 966
- US-A1- 2019 072 966
- US-A1- 2019 291 726
- US-A1- 2019 291 726

## Description

### CROSS REFERENCE TO RELATED APPLICATIONS

This PCT International Patent Application is a continuation of and claims the benefit of priority to U.S. Patent Application No. 16/586,604, filed September 27, 2019, entitled "BLOCKING OBJECT AVOIDANCE".

### BACKGROUND

Planning systems in autonomous and semi-autonomous vehicles determine actions for a vehicle to take in an operating environment. Actions for a vehicle may be determined based in part on avoiding objects present in the environment. For example, an action may be generated to stop for a pedestrian that is blocking a path of the vehicle, slow behind a bicyclist operating in the path, or the like. Traditional planning systems may choose an action for the vehicle based on a determination that the action is a most conservative action, such as remaining stopped until the pedestrian has moved completely out of the path, remaining behind the bicycle, or the like. However, such traditional planning systems may actually prevent the vehicle from operating safely in the environment (as such operations may cause secondary collisions) and may greatly impede vehicle progress. As such, the traditional planning systems may negatively impact vehicle progress without necessarily improving operational safety.

US2015210311 describes, in accordance with its abstract, a method for operating a driver assistance system, and a driver assistance system. The method includes the steps: determination of a current position of a pedestrian in an environment surrounding the vehicle; determination of a first current state of motion of the pedestrian; determination of a second current state of motion of the vehicle; calculation of a sojourn probability distribution of the pedestrian, the sojourn probability distribution being a function of time and of space and being based on a pedestrian motion model in connection with the determined current position of the pedestrian and the determined current state of motion of the pedestrian; calculation of a trajectory, based on the calculated sojourn probability distribution of the pedestrian and on the second current state of motion of the vehicle, having a minimum collision probability for the vehicle and the pedestrian; and operation of the driver assistance system of the vehicle based on the calculated trajectory.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 is an illustration an environment, in which an example object avoidance system may be used by an autonomous vehicle to circumnavigate a blocking object in the environment.
FIG. 2 is an illustration of a process for determining to navigate a vehicle around a dynamic blocking object.
FIG. 3 is an illustration of a process for determining to navigate a vehicle around a blocking object while remaining in an operating lane.
FIG. 4 is a block diagram of an example system for implementing the techniques described herein.
FIG. 5 depicts an example process for determining to navigate around an object in an environment.
FIG. 6 depicts an example process for controlling a vehicle around a blocking object according to an action based at least in part on a cost associated with the action.
FIG. 7 depicts an example process for controlling a vehicle around a blocking object and yielding to a second object detected while navigating around the blocking object.

### DETAILED DESCRIPTION

This disclosure is directed to techniques for dynamically determining an action for a vehicle to take (e.g., a path to travel) based on a detected object blocking a path (e.g., trajectory) of the vehicle. In some examples, a vehicle computing system may detect the object at a location and determine that the location is at least partially in the path of the vehicle. The vehicle computing system may determine whether to wait for the object to move out of the path or to modify the trajectory of the vehicle to navigate around the object based on a likelihood that the object will continue to block the path.

The vehicle may include an autonomous or semi-autonomous vehicle with a vehicle computing system configured to detect one or more objects in the environment. The objects may include static objects (*e.g.,* buildings, bridges, signs, etc.) and dynamic objects such as other vehicles (*e.g.,* cars, trucks, motorcycles, mopeds, etc.), pedestrians, bicyclists, or the like. Unless indicated to the contrary, the term "object" herein refers to a dynamic object (e.g., an object which is moving and/or capable of movement, albeit stopped for an instant). In some examples, the objects may be detected based on sensor data from sensors (*e.g*., cameras, motion detectors, lidar, radar, time of flight, etc. or any combination thereof) of the vehicle. In some examples, the objects may be detected based on sensor data received from remote sensors, such as, for example, sensors associated with another vehicle or sensors mounted in the environment that are configured to share data with a plurality of vehicles. In some examples, the vehicle computing system may be configured to semantically classify the detected objects. A classification may include another vehicle (e.g., car, a pick-up truck, a semitrailer truck, a tractor, a bus, a train, etc.), a pedestrian, a bicyclist, an equestrian, or the like. For example, the vehicle computing system may detect two objects and classify a first object as a bicyclist and a second object as a pedestrian.

The invention is represented by the independent claims 1 and 6. According to the invention, the vehicle computing system detects an object at a location in the environment. The vehicle computing system determines that the object is blocking a path associated with the vehicle traveling through the environment. In some examples, a determination that the object is at least partially blocking the path is based on determining that the location is within a drivable surface over which the vehicle plans to travel (e.g., associated with a vehicle trajectory).

In some examples, the vehicle computing system may determine that the object is blocking the path based on a determination that the vehicle traveling along the vehicle trajectory would pass the object at less than a threshold distance (e.g., a minimum safe distance). In some examples, the threshold distance may be based on a classification associated with the object. For example, the vehicle computing system programmed to maintain a minimum of 4 feet (or other distance) from pedestrians may detect a pedestrian standing in a bicycle lane. The vehicle computing system may determine that the vehicle traveling along a vehicle trajectory would pass three feet from the pedestrian, a distance that is less than the minimum (e.g., threshold) distance. The vehicle computing system may determine that the pedestrian is a blocking object.

In various examples, the vehicle computing system may determine a likelihood that the object will continue to block the path of the vehicle. In some examples, the likelihood may be determined based on a position of the object, a location associated with the object, a size of the object, a level of stability (e.g., amount of movement, etc.), a velocity of the object, a change in velocity of the object (e.g., velocity covariance), a detected object action, or the like.

In some examples, the likelihood may be based on a predicted object trajectory (e.g., one or more object trajectories) and/or a confidence associated with the trajectory. In some examples, the predicted object trajectory may be based on a top-down representation of an environment, such as by utilizing the techniques described in U.S. Patent Application Serial Number 16/151,607 filed October 4, 2018 and entitled "Trajectory Prediction on Top-Down Scenes," and in U.S. Patent Application Serial Number 16/504,147 filed July 5, 2019 and entitled "Prediction on Top-Down Scenes based on Action Data,". In some examples, the predicted object trajectory may be determined using a probabilistic heat map (e.g., discretized probability distribution), tree search methods and/or temporal logic formulae to predict object behavior, such as that described in U.S. Patent Application Number 15/807,521, filed November 8, 2017, and entitled "Probabilistic Heat Maps for Behavior Prediction,". In various examples, the predicted object trajectory may be determined utilizing tree search methods, temporal logic formulae, and/or machine learning techniques. In various examples, the confidence may represent a level of certainty that the vehicle computing system may have in the accuracy of the predicted object trajectory.

In various examples, the vehicle computing system may be configured to emit an audio and/or visual signal toward the blocking object. In such examples, the audio and/or visual signal may be designed (e.g., frequency, volume, etc.) to alert the blocking object of the vehicle and to encourage object movement out of the path of the vehicle. In various examples, the likelihood that the object will move out of the path of the vehicle may be based on a detected reaction to an emitted signal from the vehicle. In such examples, the vehicle computing system may determine, based on sensor data collected from the sensor(s), whether the object is likely to move (e.g., modify an object trajectory) out of the path of the vehicle. For example, the vehicle computing system may determine that a pedestrian blocking the path adjusts a position responsive to an emitted signal. The vehicle computing system may determine that the likelihood that the object will continue to block the path may be reduced based on the adjusted position, and that the vehicle should wait for the pedestrian to move out of the path.

In some examples, the vehicle computing system may determine that a likelihood that the object will move out of the path of the vehicle is at or above a threshold likelihood (e.g., 50%, 60%, etc.). In some examples, based on a determination that the likelihood is above the threshold, the vehicle computing system may determine to slow a forward speed of the vehicle to provide time for the object to move out of the path of the vehicle. In some examples, based on a determination that the likelihood is above the threshold, the vehicle computing system may cause the vehicle to slow to a speed substantially similar to that of the object and wait for the object to move clear of the path of the vehicle. In examples in which the object is dynamic, the vehicle may substantially match a speed associated with the object and maintain a safe distance behind the object. In examples in which the object is static, the vehicle computing system may cause the vehicle to stop and/or maintain a stopped position.

In various examples, the vehicle computing system may determine that the likelihood that the object will move out of the path of the vehicle is at or below the threshold, the vehicle computing system may determine to modify the vehicle trajectory to navigate around the object. In some examples, the determination to modify the vehicle trajectory to navigate around the object may be based on determining that the likelihood is below a second (e.g., minimum) threshold (e.g., 20%, 30%, etc.). In various examples, a modification to the vehicle trajectory may include modifying a position in a lane, changing lanes, modifying a speed of the vehicle, or the like.

**In** various examples, the vehicle computing system may determine a cost associated with each action, such as those described in U.S. Patent Application Number 16/539,928 filed August 13, 2019, entitled "Cost-Based Path Determination,". The cost may be based on one or more of a safety cost (e.g., safety of the vehicle and/or object, avoiding a collision between the vehicle and the object), a comfort cost (e.g., lack of abrupt movements - e.g., by penalizing large magnitude accelerations, less than a minimum distance between the vehicle and the object), a progress cost (e.g., movement toward destination), an operational rules cost (e.g., rules of the road, laws, codes, regulations, etc.), or the like. In some examples, the vehicle computing system may select the action to take based on the cost associated therewith. In some examples, the vehicle computing system may select the action based on an action having a lowest cost associated therewith, as compared to other actions. In some examples, the vehicle computing system may determine an action to take based on the cost associated therewith being less than a threshold cost.

For example, a vehicle computing system may determine that a lane in which a vehicle is operating is blocked by an object standing in the lane taking pictures, but that an adjacent lane is clear of other objects. The vehicle computing system may calculate a cost associated with operating in the adjacent lane to navigate around the blocking object. Based on a determination that the cost is at or below a threshold, the vehicle computing system may cause the vehicle to navigate into the adjacent lane around the blocking object. Based on a determination that the cost is above the threshold, the vehicle computing system may cause the vehicle to stop (or maintain a stopped position) prior to a location associated with the blocking object.

The techniques discussed herein may include improvements to the technical field of autonomous and/or semi-autonomous vehicle control planning. Traditionally, in control planning for an autonomous vehicle, a vehicle computing device may detect an object blocking a path, such as a pedestrian in the road, and may stop the vehicle to wait for the pedestrian to move out of the way. While ensuring safety of the pedestrian and the vehicle, stopping to wait for blocking objects may sacrifice other factors, such as progress and comfort for the vehicle, occupants of the vehicle, and other vehicles on the road (e.g., traffic back-up waiting for the pedestrian to move). The techniques described herein, however, include a means by which the vehicle computing system may select an action that optimizes safety, comfort, and progress for the vehicle. Accordingly, the techniques described herein improve the technical field of autonomous and/or semi-autonomous vehicle.

The techniques described herein may be implemented in a number of ways. Example implementations are provided below with reference to the following figures. Although discussed in the context of an autonomous vehicle, the methods, apparatuses, and systems described herein may be applied to a variety of systems (e.g., a sensor system or a robotic platform), and are not limited to autonomous vehicles. In one example, similar techniques may be utilized in driver-controlled vehicles in which such a system may provide an indication of whether it is safe to perform various maneuvers. In another example, the techniques may be utilized in an aviation or nautical context, or in any system using planning techniques.

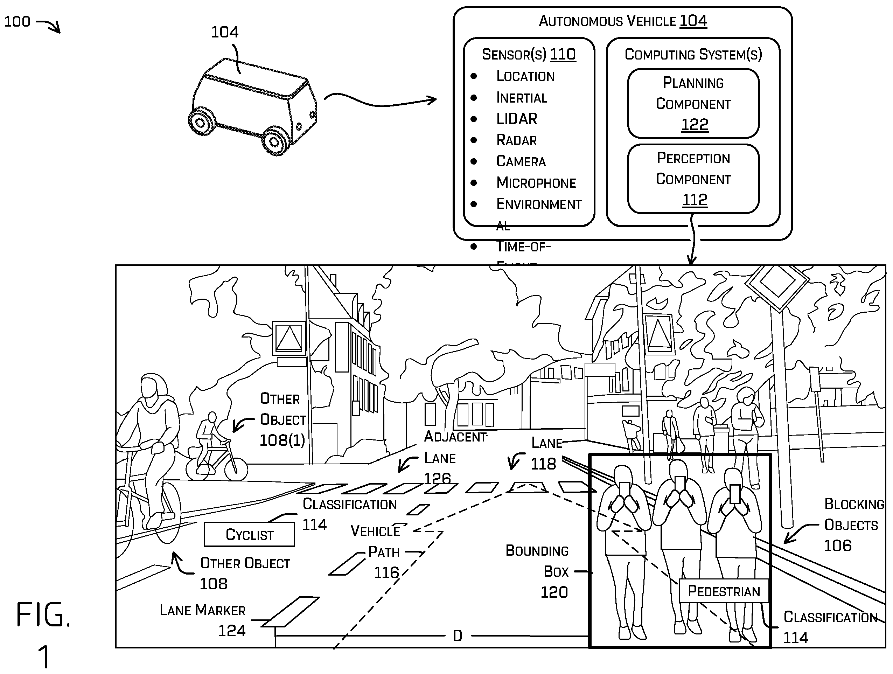

FIG. 1 is an illustration an environment 100 in which one or more computing systems 102 of an autonomous vehicle 104 (e.g., vehicle 104) may detect one or more objects 106 blocking a path of the vehicle 104 (e.g., blocking object(s) 106) and control the vehicle 104 based on a likelihood that the blocking object(s) 106 will move out of the path of the vehicle 104. Blocking object(s) 106 may include those that impede forward progress of the vehicle 104 along a pre-defined route and/or determine trajectory (e.g., speed and/or direction of travel) associated with travel from a location to a destination. Such determination may be based on a threshold speed of the vehicle and/or a progress cost associated with the vehicle, as otherwise discussed herein. The blocking object(s) may be substantially stationary (e.g., pedestrians standing and/or milling about in front of the vehicle 104, etc.) and/or dynamic (e.g., bicyclist in the road in front of the vehicle 104 traveling at a speed slower than that associated with a trajectory of the vehicle 104, pedestrians walking in the road in front of the vehicle 104, such as those navigating around a construction zone, etc.). The vehicle 104 may detect the blocking object(s) 106 and one or more other objects 108 based on sensor data captured by one or more sensors 110 of the vehicle 104. The sensor data captured by the sensor(s) 110 may include data captured by lidar sensors, camera sensors, radar sensors, time-of-flight sensors, sonar sensors, and the like.

In some examples, the sensor data can be provided to a perception component 112 configured to determine a classification 114 associated with the blocking object(s) 106 and/or the other object(s) 108 (e.g., vehicle, pedestrian, bicycle, motorcycle, animal, and the like). In various examples, the perception component 112 may determine an object classification 114 based on one or more features associated with the blocking object(s) 106 and/or the other object(s) 108. The features may include a size (e.g., width, height, depth, etc.), shape (e.g., geometry, symmetry, etc.), and/or other distinguishing features of the objects 106 and/or 108. For example, the perception component 112 may recognize the size and/or shape of the blocking object(s) 106 correspond to pedestrians and the other object 108 corresponds to a cyclist.

In various examples, the perception component 112 may be configured to determine that the blocking object(s) 106 are blocking a vehicle path 116 (path 116) associated with vehicle 104 travel through the environment 100. In some examples, the vehicle path 116 may include a path of the vehicle 104 from a current location to a destination. In some examples, the path 116 may include a drivable surface (e.g., drivable area) associated with the vehicle 104 travel to the destination. In some examples, the drivable surface may include a width of the vehicle 104 and/or a safety margin on either side of the vehicle 104. In some examples, the drivable surface may include the width of the lane 118.

In some examples, the perception component 112 may determine that the blocking object(s) 106 are blocking the vehicle path 116 based on a determination that a location associated with the blocking object(s) 106 is at least partially within the drivable area and/or path 116 of the vehicle. In the illustrative example, at least a portion of each of the three blocking objects 106 is located within the vehicle path 116. In other examples, based on a determination that at least a portion of at least one of the blocking objects 106 are located in the path 116, the perception component 112 may determine that the group of three pedestrians are designated as blocking objects 106. In some examples, based on a determination that at least a portion of at least one of the blocking objects 106 are located in the path 116, the perception component 112 may generate a bounding box 120 around the group of blocking objects 106. In such examples, the perception component 112 may consider the group of blocking objects 106 together.

In various examples, the perception component 112 may determine that the blocking object(s) 106 are blocking the vehicle path 116 based on a determination that the vehicle is not able to proceed around the blocking objects 106 in the lane 118. In such examples, the distance D may be less than a width of the vehicle plus a minimum safe distance (e.g., safety margin) from the blocking object(s) 106. In some examples, the minimum safe distance may be based on the classification 114 associated with the blocking object(s) 106. For example, the minimum safe distance associated with pedestrians may be 1 meter and the minimum safe distance associated with bicyclists may be 1.2 meters. In various examples, the minimum safe distance may be based on a vehicle speed. In such examples, the faster the vehicle 104 travels, the greater the minimum safe distance, or vice versa. For example, a vehicle traveling 10 miles per hour may include a minimum safe distance of 3 feet from a pedestrian and a vehicle traveling 20 miles per hour may include a minimum safe distance of 5 feet. Though the distances and speeds are merely illustrative examples, and other speeds and/or distances may be contemplated.

In various examples, based on a determination that the blocking object(s) 106 are blocking the path 116, the perception component 112 may fuse the blocking object(s) 106 into the drivable area of the vehicle 104, such as that described in U.S. Patent Application Number 15/982,694 filed May 17, 2018 and entitled "Drive Envelope Determination". In such examples, the fusion of the blocking object(s) 106 includes a modification of the drivable area such that the location occupied by the blocking object(s) 106 is removed from the available drivable surfaces (e.g., no longer an area in which the vehicle 104 may travel). In some examples, a reference line associated with the vehicle path 116 (e.g., centerline of vehicle movement) may shift a distance away from the blocking object(s) 106. The distance may include a minimum safe distance or greater distance away from the blocking object(s) 106.

In various examples, the perception component 112 may be configured to provide the sensor data (e.g., blocking object determinations, classifications of blocking objects 106, etc.) to the planning component 122 for determining an action for the vehicle to take. In some examples, the action may be determined based on a likelihood that the blocking object(s) 106 will continue to block the vehicle path 116. In some examples, the determination of continued blocking may be based on a likelihood that the blocking object(s) 106 will remain (at least partially) in the path 116 for a threshold amount of time (e.g., 15 seconds, 30 seconds, 1 minute, etc.). In some examples, the likelihood may be determined based on a position of the blocking object(s) 106, one or more locations associated with the blocking object(s) 106 (e.g., known location of tourist attention, picture taking, etc.), a classification 114 of the blocking object(s) 106, a size of the blocking object(s) 106 (e.g., width, height, number of pedestrians in a group, etc.), a level of stability (e.g., amount of movement, etc.), a velocity of the blocking object(s) 106, a change in velocity of the blocking object(s) 106 (e.g., velocity covariance), a detected object action (e.g., taking pictures, pointing at another object, etc.), a known time associated with the detected object action (e.g., time associated with taking pictures at a landmark, etc.), or the like. For example, the blocking objects 106 may be at a location associated with tourist activity and may be determined to be taking pictures with image capture devices. The planning component 122 may determine, based on the location and the detected activity (e.g., action) associated with the blocking objects 106, that the blocking objects 106 will likely continue to block the path 116 of the vehicle (e.g., high likelihood of continued blocking).

In various examples, the planning component 122 may be configured to determine the likelihood that a blocking object(s) 106 will continue to block the path 116 by utilizing machine leaming techniques. In such examples, one or more machine learning algorithms may be trained utilizing training data comprising a plurality of blocking object(s) 106. In various examples, the machine learning algorithm(s) may be trained according to one or more of the features above, such as locations, sizes, levels of stability, detected object actions, velocities, changes in velocity, etc. of the blocking object(s) 106. In such examples, the machine learning algorithm(s) may be configured to determine, based on the feature(s), the likelihood that the blocking object(s) 106 will continue to block the vehicle path 116.

In some examples, the likelihood may be based on one or more predicted trajectories (e.g., object trajectories) associated with the blocking object(s) 106 and/or a confidence associated with the object trajectories. In such examples, a prediction component of the planning component 122 may be configured to determine the predicted object trajectories. For example, based on a determination that the predicted object trajectories include little to no velocity in a direction out of the path 116, the planning component 122 may determine that there is a high likelihood that the blocking object 106 will remain in the path 116. Conversely, based on a determination that the object trajectories include a direction of travel out of the path 116, the planning component 122 may determine that there is a low likelihood that the blocking object 106 will remain in the path 116.

In some examples, the object trajectories may be based on a top-down representation of an environment, such as by utilizing the techniques described in U.S. Patent Application Serial Number 16/151,607 and in U.S. Patent Application Serial Number 16/504,147. In some examples, the predicted object trajectories may be determined using probabilistic heat maps (e.g., discretized probability distribution), tree search methods, temporal logic formulae, and/or machine learning techniques to predict object behavior, such as that described in U.S. Patent Application Number 15/807,521. In various examples, the confidence may represent a level of certainty that the planning component 122 may have in the accuracy of the predicted object trajectory.

In some examples, the planning component 122 may determine an action to take based on the likelihood. In examples in which the object is dynamic, the vehicle may substantially match a speed associated with the object and maintain a safe distance behind the object. In the illustrative example, the blocking object(s) 106 are substantially static (e.g., standing in the lane 118). In such an example, the action may include stopping the vehicle 104 (and/or maintaining a stopped position) prior to the location associated with the blocking object(s) 106. In some examples, the planning component 122 may determine to stop the vehicle 104 and/or maintain a stopped position prior to the location based on a determination that the likelihood is low that the blocking object(s) 106 will remain in the vehicle path 116. In some examples, the determination to stop (remain stopped) may be based on a determination that the likelihood is at or below a threshold likelihood (e.g., 25%, 35%, 50%, etc.).

In various examples, the action may include modifying a vehicle trajectory to cause the vehicle 104 to travel a second path (e.g., different path). In some examples, the modification to the vehicle trajectory to travel the second path may be based on a determination that the likelihood is at or above the threshold likelihood (e.g., 50%, 60%, etc.) that the blocking object(s) 106 will remain in the first path 116. The second path may include a vehicle path 116 that circumnavigates the blocking object(s) 106. The second path and/or associated vehicle trajectory may result in the vehicle 104 continuing progress toward the destination while avoiding the blocking object(s) 106 by at least a minimum safe distance. The vehicle trajectory and/or second path may be associated with a position of the vehicle 104 in the lane 118, a lane change (e.g., into an adjacent lane 126), and/or adjusting a position of the vehicle 104 at least partially outside the lane 118 (e.g., onto a shoulder, into a bike lane, or the like) to safely navigate around the blocking object(s) 106.

In various examples, the action may include adjusting a position in a lane 118 to navigate around the blocking object(s) 106. In some examples, the planning component 122 may determine whether the vehicle 104 is able to proceed around the blocking object(s) 106 in the lane 118 (e.g., whether adjusting a position is a viable action). In such examples, the planning component 122 may determine the distance (D) between the blocking object(s) 106 and/or the bounding box 120 associated therewith and a lane marker 124 (e.g., road marking delineating the edge of the lane, etc.). The planning component 122 may determine whether the distance (D) is equal to or greater than a width of the vehicle 104 and/or a safety buffer (e.g., minimum safe distance) from the blocking object(s) 106. As discussed above, the minimum safe distance may be based on the classification 114 associated with the blocking object(s) 106.

In various examples, based on a determination that the distance (D) is equal to or greater than the width of the vehicle 104 plus the minimum safe distance, the planning component 122 may determine that the adjusting a position in the lane 118 is a viable action. In such examples, the vehicle 104 at a maximum lateral distance in the lane 118 from the blocking object(s) 106 may be at least the minimum safe distance from the blocking object(s) 106. In various examples, the planning component 122 may determine that adjusting a position in the lane 118 is a viable action based at least in part on an action cost associated therewith. As discussed in further detail below, the planning component 122 may determine action costs associated with an action, such as adjusting a position in a lane on a first trajectory associated with a first distance from the blocking object(s) 106 and a first speed, adjusting a position in the lane on a second trajectory associated with a second distance from the blocking object(s) 106 and a second speed, and the like. In at least some such examples, such costs may include, for example, a cost based on a width available in the lane (e.g., such that the cost increases exponentially relative to a width of the vehicle and/or an additional buffer). As a non-limiting example, the cost may be polynomialy, exponentially, or otherwise a function of a width of a lane relative to a threshold width. In some examples, such a cost may be based on a distance to nearest objects, which may include boundaries of the drivable surface. In various examples, the planning component 122 may determine action costs associated with each potential action and may select an action based on the respective action cost. In some examples, the action may be determined based on a cost optimization. In such examples, a most cost-effective action may be selected for the vehicle.

In some examples, based on a determination of viability, the planning component 122 may determine one or more passing speeds associated the vehicle navigating around the blocking object(s) 106 at one or more passing distances. The passing distance(s) may include one or more distances that are equal to or greater than the minimum safe distance between the vehicle 104 in the lane 118 and the blocking object(s) 106. In other words, the passing distance(s) may include any distance associated with the vehicle 104 passage within the confines of the lane 118 and outside the minimum safe distance. In various examples, the speed may be determined based on the cost optimization described above. In such examples, the distance and/or speed may be determined based on a most cost-effective action for the vehicle to take (e.g., lowest cost action).

In various examples, the passing speed(s) may be associated with the passing distance(s). In such examples, the greater the distance above the minimum safe distance, the faster the vehicle 104 may travel. In various examples, the vehicle 104 may be limited to a maximum passing speed while navigating around the blocking object(s) 106. In such examples, the planning component 122 may limit the vehicle 104 passing speed to the maximum passing speed. In some examples, the maximum passing speed may include a relative speed between the vehicle 104 and the blocking object 106. For example, the vehicle 104 may be limited to passing the blocking object 106 at 15 miles per hour (or other speed) relative to a speed associated with an object trajectory.

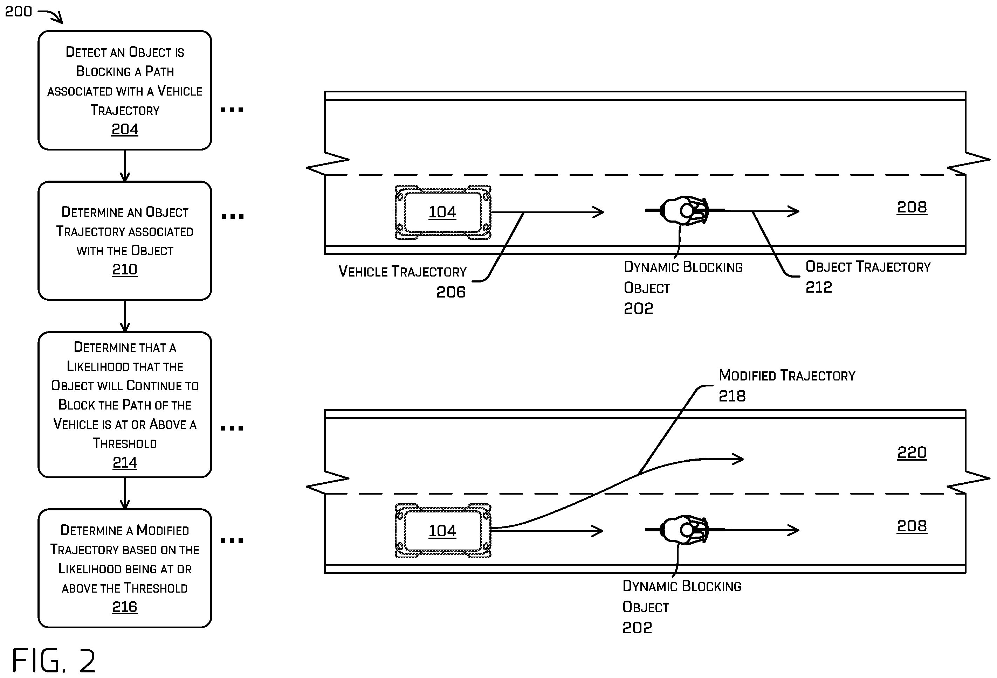

In some examples, the passing speed(s) and/or maximum passing speed may be based on a classification 114 associated with the blocking object(s) 106. For example, a maximum passing speed at which a vehicle 104 may pass a cyclist may be 15 kilometers per hour and a maximum passing speed at which the vehicle 104 may pass a pedestrian may be 10 kilometers per hour, though these are merely illustrative example passing speeds and any other speeds are contemplated herein. For another example, the planning component 122 may access a first table of passing distances and associated speeds corresponding to passing pedestrians in the lane 118 and a second table of passing distances and associated speeds corresponding to passing a cyclist, such as that illustrated in FIG. 2.

In various examples, the action may include at least partially changing lanes into an adjacent lane 126. In some examples, a lane change may include at least a portion of the vehicle 104 exiting the lane 118 and entering an adjacent lane 126, a shoulder of the road, bicycle lane, or the like. In various examples, the planning component may determine to change lanes based on a determination that a positional adjustment in the lane 118 is not viable. In some examples, actions associated with lane changes may be limited by the color and/or style (e.g., broken, solid, double line, etc.) of lane marker 124 and/or environmental factors (e.g., road curvature, speed limit, etc.). In such examples, the planning component 122 may be configured to determine whether a lane change is a viable action based on the color and/or style of the lane marker 124 and/or the environmental factors. For example, the vehicle 104 may cross a double yellow solid lane marker 124 based on a determination that the speed limit is below a threshold speed limit and the road is substantially straight (e.g., not curved).

In various examples, the planning component 122 may determine that the adjacent lane 126 is clear of other objects 108. In some examples, the planning component 122 may determine that a threshold area of the adjacent lane 126 is clear of the other objects 108. In some examples, the threshold area may include at least a width of the vehicle 104 that will be in the adjacent lane 126 and/or a safety buffer (e.g., minimum safe distance) from the other objects 108. In some examples, the threshold area may be associated with an area necessary to transition at least partially into the adjacent lane 126 without encroaching within a threshold distance (e.g., minimum safe distance) in front of, behind, or laterally from another object 108. In some examples, the perception component 112 may provide data corresponding to occupancy of the adjacent lane 126 to the planning component 122.

In some examples, the adjacent lane 126 may be associated with traffic traveling in a same direction as the vehicle 104. In such examples, the planning component 122 may determine to move into the adjacent lane 126 to circumnavigate the blocking object(s) 106 and may continue along a second path 116 in the adjacent lane 126 to a destination. In the illustrative example, the adjacent lane 126 may be associated with opposite direction traffic. In such an example, the planning component 122, such as via sensor data provided by the perception component 112, may determine that the adjacent lane 126 is clear of oncoming traffic. In various examples, the threshold area associated with the adjacent lane 126 with opposite direction traffic may include an area encompassing a distance that the vehicle 104 will travel around the blocking object(s) 106 plus a distance that another object 108 would cover (e.g., at the speed limit associated with the environment 100) in a time necessary for the vehicle to circumnavigate the blocking object(s) 106. In some examples, based on a determination that another object 108 is occupying the threshold area, the planning component 122 may cause the vehicle 104 to yield to the other object 108 prior to proceeding along the second path.

In various examples, the planning component 122 may determine an action to take based upon costs associated therewith. In such examples, the planning component 122 may compare costs associated with one or more different actions (e.g., maintaining a stopped position to wait for the blocking object(s) 106 to move, adjusting a position in the lane, changing lanes partially, full lane change, etc.) and select a lowest cost action. In various examples, the planning component 122 may determine costs associated with various iterations of each action. In such examples, the planning component 122 may determine costs associated with adjusting a position in the lane and/or partially or fully changing lanes at different distances and/or speeds. In various examples, the planning component 122 may determine an action to take based on an optimization of the costs associated with each different action and/or iteration of the action.

In some examples, the costs may be based on one or more of safety (e.g., avoiding a collision between the vehicle 104 and the blocking object(s) 106 and other objects 108), comfort (e.g., lack of abrupt movements of the vehicle 104), progress (e.g., movement of vehicle 104 toward destination), operating rules (e.g., rules of the road, laws, codes, regulations, etc.), and the like, such as those described in U.S. Patent Application Number 16/539,928.

In some examples, the cost associated with safety (e.g., safety cost) may be based on a probability of collision between the vehicle 104 and the blocking object(s) 106 and other objects 108. In some examples, the safety cost may include a fixed cost (e.g., 60, 80, 100, etc.) if a probability of collision is greater than a predefined threshold indicating that a collision is likely (e.g., 40%, 51%, etc.). In some examples, the fixed cost may include a cost value above a threshold such that the vehicle computing system could not select the action associated therewith. In such examples, the probability of collision may include a constraint on actions the vehicle 104 may take.

In some examples, the safety cost may be based on relative positions and/or trajectories between the vehicle 104 and the blocking object(s) 106 and/or other objects 108. In such examples, the safety cost may increase the closer a vehicle 104 (traveling on a vehicle trajectory) gets to the blocking object(s) 106 and other objects 108. In some examples, the safety cost may be based on the classification 114 associated with the blocking object(s) 106 and other objects 108.

In various examples, a comfort cost may be associated with an estimated acceleration (e.g., positive, negative, lateral, etc.) and/or an estimated change in acceleration (e.g., jerk) associated with a vehicle trajectory corresponding to a second path around the blocking object(s) 106. In some examples, the comfort cost may be associated with a distance between the vehicle 104 performing the associated action and the blocking object(s) 106 and other objects 108. In such examples, the comfort cost may be associated with a closest point of approach between the vehicle 104 and the blocking object(s) 106 and other objects 108. In some examples, the comfort cost may be associated with a passing speed associated with the action. In some examples, the comfort cost may be associated with a relative speed between the vehicle 104 and the blocking object(s) 106 and other objects 108. In some examples, the distance and/or speeds associated with the comfort cost may be based on the classification 114 associated with the blocking object(s) 106 and other objects 108. In other examples, any other state/control of the vehicle 104 and/or considered objects 106 and/or 108 may be used in determining the comfort cost (e.g., how close to other vehicles - as may be computed as a nearest neighbors, or next nearest neighbors, steering rates, rotation rates, velocities, and the like).

In various examples, a progress cost may include the progress of the vehicle 104 moving toward a destination. In some examples, the progress cost may be calculated based on a change in velocity of the vehicle 104 and/or a delay of the vehicle 104 caused by the vehicle stopping, slowing down, etc. In some examples, the progress cost may include a value substantially similar to the number of seconds of delay attributed to the action. In such examples, an action including the vehicle stopping and/or maintaining a stopped position to wait for the blocking object(s) 106 to move out of the path 116 may be associated with a higher progress cost than that associated with an action including navigation around the blocking object(s) 106.

In various examples, an operational rules cost may be based on rules of the road (e.g., department of transportation laws, codes, regulations, etc.), rules of good driving, regional driving habits (e.g., common driving practices), driving courtesies (e.g., adjusting a position in a lane to provide space for another car to pass for a right-hand turn, not occupying a bike lane, etc.). In various examples, the operational rules cost associated with an action may be calculated based on one or more rules that are broken and/or satisfied. In such examples, the operational rules cost may be increased based on rules (e.g., regulations, habits, courtesies, etc.) that are broken or unfulfilled and/or decreased based on rules that are satisfied or fulfilled. For example, an action associated with changing a lane into oncoming traffic may include breaking a rule that the vehicle 104 should remain in the lane 118 designated for traffic operating in a direction associated with the vehicle path 116. The action may include a higher operational rules cost than an action involving a positional adjustment of the vehicle 104 in the lane 118.

In various examples, the operational rules cost may be determined based rules, regulations, etc. associated with the lane marker 124. In such examples, the color of the lane marker 124 and/or whether the lane marker 124 is solid and/or broken may contribute to the operational rules cost associated with an action. For example, an action associated with crossing a double yellow line may have a high operational rules cost (e.g., 40, 50, etc.) associated therewith. For another example, a broken white line may have a low operational rules cost (e.g., 5, 10, etc.) associated therewith.

In various examples, the costs may be ranked or weighted in order of importance. In some examples, the at least one of the costs (e.g., safety, comfort, progress, operational rules) may include a cost that is weighed higher than the other costs. For example, safety may be weighed higher than other factors. In such an example, the planning component 122 may emphasize safety above other factors in a determination of an action for the vehicle 104 to take.

In various examples, the planning component 122 may cause the vehicle 104 to perform an action associated with circumnavigating the blocking object(s) 106. In such an example, the planning component 122 may continue to receive sensor data corresponding to the environment 100 from the perception component 112. The sensor data may include data associated with the blocking object(s) 106 and/or other objects 108. In various examples, the perception component 112 may be configured to process the sensor data and determine predicted object trajectories associated with the blocking object(s) 106 and/or other objects 108. In such examples, the predicted object trajectories may include updated object trajectories associated with the blocking object(s) 106.

In various examples, the planning component 122 may determine that another object 108 may include an object trajectory that converges with a vehicle trajectory associated with the second path (e.g., navigating around the blocking object(s) 106. Based on a determination that the object trajectory and/or the vehicle trajectory converge and/or that the vehicle 104 will come within a threshold distance to the other object 108, the planning component 122 may cause the vehicle to reduce speed and/or stop prior to a location associated with the other object 108, such as to avoid a collision associated therewith. The planning component 122 may cause the vehicle to continue slowing and/or maintain the stopped position until determining that the other object 108 is no longer a factor (e.g., trajectories associated with the vehicle 104 and the other object 108 do not converge, no likelihood of collision between the vehicle 104 and the other object 108, etc.). For example, the vehicle 104 may determine to move into the adjacent lane 126 to navigate around the blocking object(s) 106. While operating in the adjacent lane 126, the perception component 112 may detect the other object 108(1) and may determine an object trajectory associated with the other object 108(1) crosses a vehicle trajectory associated with the action (e.g., associated with the second path). The planning component 122 may cause the vehicle to stop at a location prior to the object trajectory (e.g., prior to the crosswalk depicted in the environment 100).

In various examples, the planning component may cause one or more signals to be emitted from the vehicle 104. In some examples, the planning component 122 may attempt to cause the blocking object(s) 106 to move out of the vehicle path 116 prior to determining an action for the vehicle 104 to take around the blocking object(s) 106. The signal(s) may include one or more of an audio signal or a visual signal (e.g., light signal, holographic image, etc.) to be emitted from an output device of the vehicle 104. In various examples, the signal(s) may be emitted to alert the blocking object(s) 106 of the vehicle 104 presence. In such examples, the signal(s) may provide a means by which the blocking object(s) 106 may determine that the vehicle 104 is present and/or that the blocking object(s) 106 is blocking the path 116. The signal(s) may thus be emitted with the intent to cause the blocking object(s) 106 to move out of the path 116. For example, the vehicle 104 may emit an audio signal, such as a gentle hom honk, to alert the pedestrian blocking objects 106 that they are in the vehicle path 116.

In some examples, the signal(s) may be emitted to inform the blocking object(s) 106 of a potential direction in which the blocking object(s) 106 may move out of the vehicle path 116. In such examples, the signal(s) may be configured to assist the blocking object(s) 106 in determining an object trajectory to move out of the path 116. For example, a blocking object 106 may be a vehicle blocking an intersection in a first lane. The perception component 112 may determine that a second lane (e.g., adjacent lane to the first lane) may include an area for the blocking object 106 to move such that the blocking object 106 would no longer block the vehicle path 116. The planning component 122 may receive the information from the perception component 112 and may cause a light to be emitted in the shape of an arrow pointed in the direction of the second lane (e.g., on the road visible to an operator of the blocking object 106). The operator of the blocking object 106 may thus be assisted in determining a direction to move out of the way of the vehicle 104 by following the arrow into the second lane.

In some examples, the perception component 112 may receive an indication that the blocking object(s) 106 do not intend to move out of the way of the vehicle 104. The indication may include an audio and/or visual signal received from the blocking object(s) 106, such as via one or more sensors. In some examples, the indication may include a movement or lack thereof indicating that the blocking object 106 does not intend to move out of the vehicle path 116. In some examples, the indication may include a verbal indication, such as a pedestrian voicing "I am not moving," or other phrase to indicate an intent to remain in the vehicle path 116. In such examples, the indication may be received via one or more microphones on the vehicle 104 and may be processed by the computing system(s) 102 utilizing natural language processing and/or other means of language processing to determine one or more words spoken and/or an intent thereof. In various examples, the indication may be utilized by the perception component 112 to determine the likelihood that the blocking object(s) 106 will remain in the vehicle path 116. In such examples, the planning component 122 may determine an action to take based at least in part on the indication.

FIG. 2 is an illustration of a process 200 for determining to navigate a vehicle 104 around a dynamic blocking object 202, such as blocking object 106. In the illustrative example, the vehicle computing system may classify the dynamic blocking object 202 as a bicyclist. In other examples, the dynamic blocking object 202 may include other classifications of objects, such as scooters, mopeds, pedestrians (e.g., runners, walkers, etc.), or the like.

At operation 204, the process may include detecting an object is blocking a path associated with a vehicle trajectory 206, such as vehicle path 116. In various examples, a vehicle computing system may determine that the dynamic blocking object 202 is blocking the vehicle trajectory 206 based on a determination that at least a portion of the dynamic blocking object 202 is located in the lane 208 associated with the vehicle 104, such as lane 118. In some examples, the vehicle computing system may determine that the dynamic blocking object 202 (e.g., one or more locations associated therewith) is at least partially within a drivable surface associated with the vehicle trajectory 206.

At operation 210, the process may include determining an object trajectory 212 associated with the object (e.g., dynamic blocking object 202). In various examples, the object trajectory 212 may be determined based on captured sensor data over time. In such examples, the vehicle computing system may process the sensor data to determine a change in position of the dynamic blocking object 202 over time, and may determine the object trajectory 212 (e.g., speed, change in speed, direction of travel, etc.) based on the change in position over time. In some examples, the vehicle computing system may determine the object trajectory 212 based on a top-down representation of an environment (e.g., determined utilizing sensor data), such as by utilizing the techniques described in U.S. Patent Application Serial Number 16/151,607 and in U.S. Patent Application Serial Number 16/504,147. In such examples, the object trajectory 212 may include a prediction of movement (e.g., direction of travel, speed, etc.) of the dynamic blocking object 202 in the future. In some examples, the predicted object trajectories may be determined using probabilistic heat maps (e.g., discretized probability distribution), tree search methods, temporal logic formulae, and/or machine learning techniques to predict object behavior, such as that described in U.S. Patent Application Number 15/807,521. Similar to the top-down representation, in such examples, the object trajectory may include a prediction of movement of the dynamic blocking object 202 in the future.

In various examples, based on a determination that the object trajectory 212 includes a direction of travel that is substantially similar to the vehicle trajectory 206, the vehicle computing system may determine that the object is a dynamic blocking object 202. The dynamic blocking object 202 may include an object that is blocking the vehicle path and moving in a substantially similar direction, but at a slower speed than the vehicle 104.

At operation 214, the process may include determining that a likelihood that the dynamic blocking object 202 will continue to block the path of the vehicle 104 is at or above a threshold. In various examples, the likelihood may be based on a position of the dynamic blocking object(s) 202, one or more locations associated with the dynamic blocking object(s) 202 (e.g., known location of tourist attention, picture taking, etc.), a classification of the blocking object(s) 106, a size of the blocking object(s) 106 (e.g., width, height, number of cyclists in a peloton, etc.), a level of stability (e.g., amount of movement, consistency of movement, etc.), a velocity of the dynamic blocking object(s) 202, a change in velocity of the dynamic blocking object(s) 202 (e.g., velocity covariance), a detected object action (e.g., taking pictures, pointing at another object, etc.), a known time associated with the detected object action (e.g., time associated with taking pictures at a landmark, etc.), or the like.

In various examples, the vehicle computing system may be configured to determine the likelihood that the dynamic blocking object(s) 202 will continue to block the path of the vehicle 104 by utilizing machine learning techniques. In such examples, one or more machine learned models may be trained utilizing training data comprising a plurality of dynamic blocking object(s) 202. In various examples, the machine learned model(s) may be trained according to one or more of the features above, such as locations, sizes, levels of stability, detected object actions, velocities, changes in velocity, etc. of the dynamic blocking object(s) 202. In such examples, the machine learned models may be configured to determine, based on the feature(s), the likelihood that the dynamic blocking object(s) 202 will continue to block the path of the vehicle 104.

In the illustrated example, the dynamic blocking object 202, a cyclist, has an object trajectory 212 with a direction of travel that is substantially the same as the vehicle trajectory 206, and has a substantially consistent velocity (e.g., minimal change in velocity). Accordingly, the vehicle computing system may determine that the likelihood that the dynamic object 202 will continue to block the path of the vehicle 104 is above a threshold likelihood (e.g., 55%, 65%, etc.).

At operation 216, the process may include determining a modified vehicle trajectory 218 (e.g., modified trajectory 218) based on the likelihood being at or above the threshold. In various examples, based on a determination that the likelihood that the object will continue to block the path of the vehicle 104 is above the threshold, the vehicle computing system may determine an action to take. In some examples, the actions may include slowing to maintain a safe distance behind the dynamic blocking object 202 (e.g., slowing to match a speed associated with the object trajectory 212), modifying a position in the lane 208, and/or at least partially changing lanes into an adjacent lane 220 to navigate around the dynamic blocking object 202. The modified trajectory 218 may be associated with the action.

In the illustrative example, the modified trajectory 218 includes full a lane change into the adjacent lane. In such an example, the vehicle computing system may determine that a threshold area of the adjacent lane 220 is unoccupied by other objects. In other examples, the modified trajectory 218 may include a trajectory associated with another action, such as a partial lane change, adjusting a position in the lane 208, or the like. As described above, the vehicle computing system may determine the action to take and/or the modified trajectory 218 associated therewith, based on a cost (e.g., safety cost, comfort cost, progress cost, operational rules cost, etc.) associated therewith. In such examples, the vehicle computing system may determine the possible actions and may determine to take the action associated with the modified trajectory 218 based on the action having the lowest cost associated therewith. For example, the comfort cost and the progress cost associated with maintaining a safe distance behind the dynamic blocking object 202 may cause the total cost associated with the action to be high. Because navigating around the dynamic blocking object 202 may be as safe (if not safer) than following the dynamic blocking object 202, and may have lower comfort and safety costs based on the increased speed at which the vehicle 104 may travel, the vehicle computing system may determine to navigate around the dynamic blocking object 202, according to the modified trajectory 218.

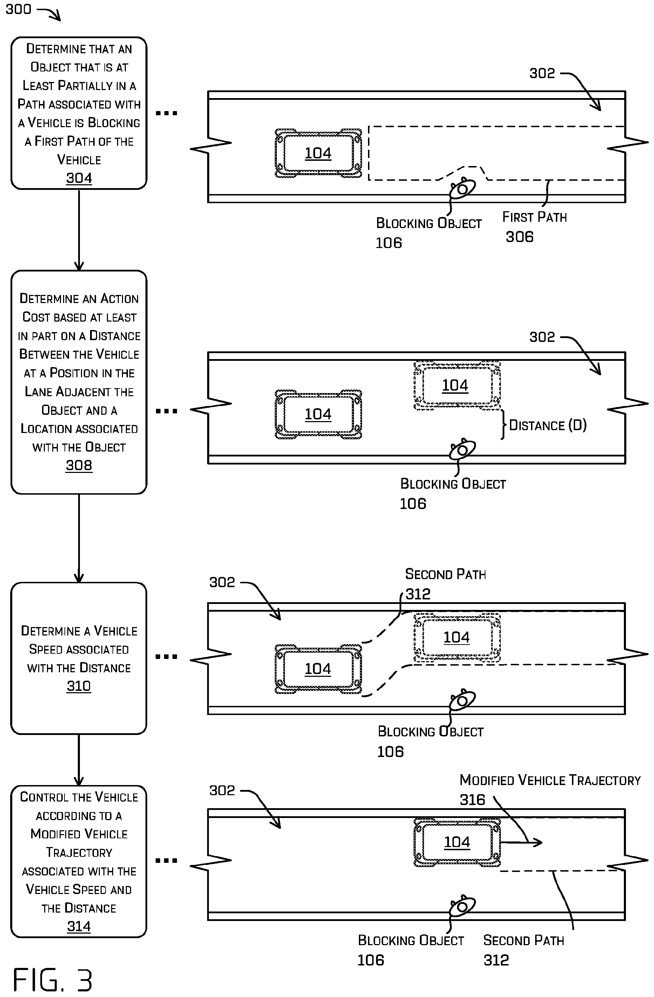

FIG. 3 is an illustration of a process 300 for determining to navigate a vehicle 104 around a blocking object 106 (e.g., object 106) while remaining in an operating lane 302 (e.g., lane 302), such as lane 118.

At operation 304, the process may include determining that an object 106 that is at least partially blocking a first path 306 of the vehicle. As discussed above, a vehicle computing system may detect the blocking object 106 based on sensor data captured by one or more sensors of the vehicle 104, other vehicles, and/or sensors mounted in an operating environment. In various examples, the first path 306 may represent a drivable area over which the vehicle 104 plans to travel according to a planned route between a first location and a destination. In some examples, the vehicle computing system may determine that the blocking object 106 is at least partially blocking the vehicle based in part on a determination that a location associated with the blocking object 106 is at least partially within the drivable area. In some examples, based on a determination that the blocking object 106 is blocking the first path 306 of the vehicle 104, the vehicle computing system may fuse the blocking object 106 into the drivable area, such as described in U.S. Patent Application Number 15/982,694. In the illustrative example, the fusion is depicted as a cut-out of the drivable area. The cut-out may include a buffer distance (e.g., minimum distance ((e.g., 3 inches, 6 inches, etc.)) for the vehicle 104 to maintain from the blocking object 106.

At operation 308, the process may include determining an action cost based at least in part on a distance (D) between the vehicle 104 at a position in the lane 302 adjacent the object 106 and a location associated with the object 106. The action cost may be associated with one or more of a safety cost, a comfort cost, a progress cost, or an operational rules cost associated with the action of circumnavigating the blocking object 106 while operating in the lane. In some examples, the vehicle computing system may determine that the distance (D) is equal to or greater than a threshold distance. In such examples, the vehicle computing system may determine that circumnavigating the blocking object while staying within the confines of the lane 302 is a viable action. Though illustrated with a vehicle 104 position at a maximum lateral distance from the blocking object 106, it is contemplated that the vehicle 104 may travel at another distance (D) from the blocking object 106 that meets or exceeds the threshold distance. Of course, though described in terms of thresholds herein, this is not meant to be so limiting. For instance, while some examples may set fixed thresholds for decision-making, it should be understood that any discussion of thresholds herein may also refer to cost expressions set up in such a way such that a transition occurs between two outcomes based on an optimization over the cost at or about such a threshold. In various examples, combinations of hard constraints (e.g., fixed threshold for decisions), as well as thresholds as representing transitions in a cost-optimization are contemplated.

In various examples, the threshold distance (e.g., 10 inches, 2 feet, 1 yard, 1 meter, etc.) may represent a minimum safe distance for the vehicle to maintain from the blocking object 106 while operating in an environment. In various examples, the threshold distance may be based on a classification associated with the blocking object 106. In such examples, the vehicle computing system may determine the classification and threshold distance associated therewith.

At operation 310, the process may include determining a vehicle speed associated with the distance. In various examples, the vehicle speed may be determined based on optimizing the action cost associated with circumnavigating the blocking object 106 at the distance (D). In such examples, the vehicle computing system may calculate action costs associated with one or more speeds and may select the speed associated with the lowest action cost. For example, the vehicle computing system may determine a first action cost associated with passing 3 meters from the blocking object at 10 miles per hour, a second action cost associated with passing 3 meters from the blocking object at 15 miles per hour, and a third action cost associated with passing 3 meters from the blocking object at 20 miles per hour. The vehicle computing system may select the lowest cost action as the action for the vehicle to perform.

In various examples, the vehicle speed may be based on the distance (D) that the vehicle 104 will maintain from the blocking object 106. The distances the vehicle 104 may maintain from the blocking object 106 may range from the threshold distance (e.g., minimum safe distance) to a distance between the vehicle 104 and the blocking object 106 associated with the vehicle 104 position at a maximum lateral position in the lane 302 (e.g., vehicle 104 operating at the lane marker).

In various examples, the vehicle speed may be based on the distance. In some examples, as the vehicle increases a distance (above the threshold distance) away from the blocking object 106, the vehicle speed may increase. For example, the vehicle speed associated with the vehicle 104 navigating around the blocking object 106 at the minimum safe distance may be 5 miles per hour and at the maximum lateral position in the lane 12 miles per hour. Though the vehicle speeds are merely illustrative, and any other speeds are contemplated herein.

In various examples, the vehicle speed may be based in part on the classification associated with the blocking object 106. In such examples, the vehicle computing system may determine the classification associated with the blocking object 106 and may determine the vehicle speed based in part on the classification. **In** some examples, for different classifications of objects (or groups of classifications (e.g., wheeled vehicles (e.g., bicycles, scooters, mopeds, etc.), pedestrians (e.g., runners, walkers, people standing in place, etc.)), or the like.

In various examples, the vehicle speeds associated with the distances and/or classifications may be pre-determined. For example, the vehicle computing system may have stored therein a table of vehicle speeds and distances associated with circumnavigating the blocking object 106. **In** some examples, the table of vehicle speeds may be associated with particular classification associated with the blocking object 106. In various examples, the vehicle speeds associated with the distances and/or classifications may be dynamically determined based on one or more environmental conditions. The environmental conditions may include weather considerations (e.g., rain, snow, etc.), road conditions (e.g., smooth surface, gravel, potholes, etc.), density of objects (e.g., number of vehicles, pedestrians, etc. in the environment), proximity to other objects (e.g., in an adjacent lane, etc.), and the like. **In** various examples, a dynamic determination of the vehicle speed may include adjusting the pre-determined vehicle speeds associated with distances and/or classifications for the environmental conditions. For example, the vehicle computing system may determine that a vehicle speed associated with a distance from the blocking object 106 is 10 kilometers per hour and that, due to the rain and wet road surface, the vehicle speed should be 8 kilometers per hour.

In various examples, responsive to determining a distance and vehicle speed at which to pass the blocking object 106, the vehicle computing system may determine a second path 312. The second path 312 may include a width of the vehicle traveling a trajectory associated with the distance and the vehicle speed. **In** various examples, the second path 312 may include the width of the vehicle plus a buffer distance (e.g., 6 inches, 8 inches, etc.). **In** such examples, the buffer distance may include a safety buffer on one or both sides of the vehicle.

In various examples, the second path may be determined based on an action cost optimization. In such examples, the vehicle computing system may determine action costs associated with multiple actions and may determine the action based on a lowest cost action. **In** some examples, the vehicle computing system may determine the trajectory associated with the lowest cost action and may cause the vehicle to travel along the trajectory associated with the lowest cost action (e.g., optimized action). For example, the actions may include navigating around the blocking object at various distances (e.g., distances associated with staying in the lane, partially changing lanes, fully changing lanes, etc.) and various speeds. The selected action (e.g., optimal action) may include the action associated with a lowest overall cost (e.g., total cost including safety cost, progress cost, comfort cost, and/or operational rules cost).

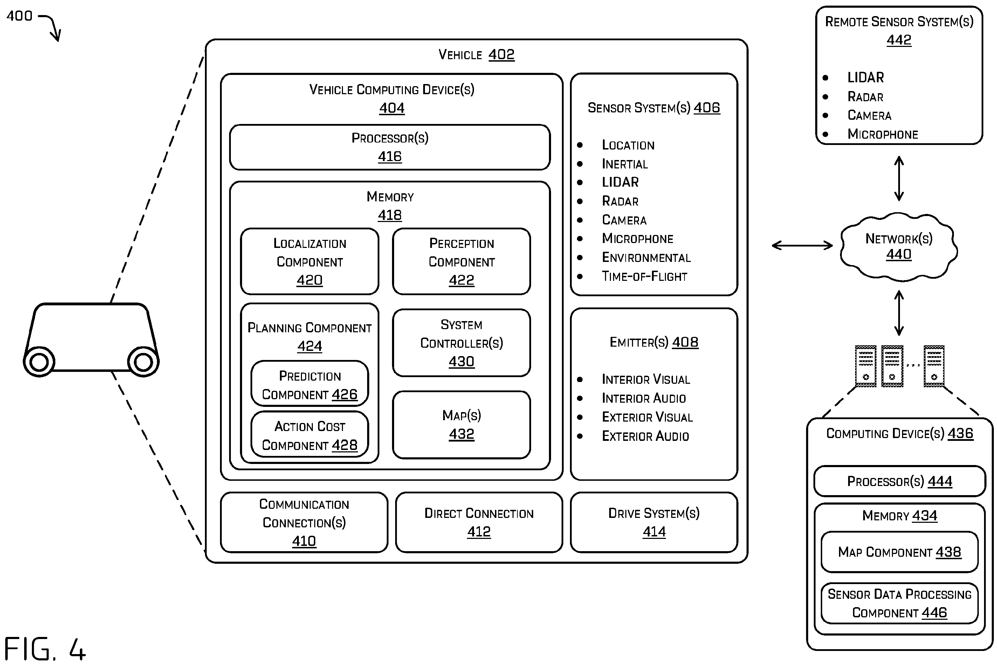

At operation 314, the process may include controlling the vehicle according to a modified vehicle trajectory 316 associated with the vehicle speed (determined at operation 310) and the distance (determined at operation 308). The vehicle computing system may cause the vehicle to circumnavigate the blocking object 106 on the modified vehicle trajectory 316. As will be discussed in greater detail below with regard to FIG. 4, the vehicle computing system may cause one or more drive system(s) to move the vehicle 104 along the second path 312 according to the modified vehicle trajectory 316.

In various examples, the vehicle computing system may determine to control the vehicle according to the modified vehicle trajectory 316 based on a determination that a cost associated therewith (e.g., cost associated with the action) is a lowest cost action. In some examples, the vehicle computing system may determine a cost associated with each action the vehicle may take. The actions may include circumnavigating the blocking object 106, circumnavigating the blocking object 106 traveling over another drivable surface (e.g., an adjacent lane, a shoulder, bike lane, etc.), and/or stopping and/or maintaining a stopped position prior to a location associated with the blocking object 106. In various examples, the vehicle computing system may determine a cost associated with each viable (e.g., possible) action. In various examples, the vehicle computing system may determine that the cost associated with the action corresponding to the modified vehicle trajectory 316 includes the lowest cost of the viable actions. In such examples, the action corresponding to the modified vehicle trajectory 316 may include a safest and/or most expeditious (e.g., efficient) action for the vehicle 104 to travel to a destination.

FIG. 4 is a block diagram of an example system 400 for implementing the techniques described herein. In at least one example, the system 400 may include a vehicle 402, such as vehicle 104. The vehicle 402 may include one or more vehicle computing devices 404, one or more sensor systems 406, one or more emitters 408, one or more communication connections 410, at least one direct connection 412, and one or more drive systems 414.

The vehicle computing device(s) 404 may include one or more processors 416 and memory 418 communicatively coupled with the one or more processors 416. In the illustrated example, the vehicle 402 is an autonomous vehicle; however, the vehicle 402 could be any other type of vehicle, such as a semi-autonomous vehicle, or any other system having at least an image capture device (e.g., a camera enabled smartphone). In the illustrated example, the memory 418 of the vehicle computing device(s) 404 stores a localization component 420, a perception component 422, a planning component 424 including a prediction component 426 and an action cost component 428, one or more system controllers 430, and one or more maps 432. Though depicted in FIG. 4 as residing in the memory 418 for illustrative purposes, it is contemplated that the localization component 420, a perception component 422, a planning component 424, one or more system controllers 430, one or more maps 432, the prediction component 426 and the action cost component 428 may additionally, or alternatively, be accessible to the vehicle 402 (e.g., stored on, or otherwise accessible by, memory remote from the vehicle 402, such as, for example, on memory 434 of one or more computing devices 436). For example, the memory 434 may store an action cost component 428 accessible by the planning component 424 of the vehicle 402.

In at least one example, the localization component 420 may include functionality to receive data from the sensor system(s) 406 to determine a position and/or orientation of the vehicle 402 (e.g., one or more of an x-, y-, z-position, roll, pitch, or yaw). For example, the localization component 420 may include and/or request / receive a map of an environment, such as from map(s) 432, and may continuously determine a location and/or orientation of the autonomous vehicle within the map. In some instances, the localization component 420 may utilize SLAM (simultaneous localization and mapping), CLAMS (calibration, localization and mapping, simultaneously), relative SLAM, bundle adjustment, nonlinear least squares optimization, or the like to receive image data, lidar data, radar data, IMU data, GPS data, wheel encoder data, and the like to accurately determine a location of the autonomous vehicle. In some instances, the localization component 420 may provide data to various components of the vehicle 402 to determine an initial position of an autonomous vehicle for determining the relevance of an object to the vehicle 402, as discussed herein.

In some examples, the perception component 422, such as perception component 112, may include functionality to perform object detection, segmentation, and/or classification. In some examples, the perception component 422 may provide processed sensor data that indicates a presence of an object (e.g., entity) that is proximate to the vehicle 402 and/or a classification of the object as an object type (e.g., car, pedestrian, cyclist, animal, building, tree, road surface, curb, sidewalk, unknown, etc.). In some examples, the perception component 422 may provide processed sensor data that indicates a presence of a stationary entity that is proximate to the vehicle 402 and/or a classification of the stationary entity as a type (e.g., building, tree, road surface, curb, sidewalk, unknown, etc.). In various examples, the perception component 422 may provide processed sensor data that indicates the presence of a blocking entity (e.g., blocking object).

In some examples, the perception component 422 may determine that a detected entity (e.g., object) is a blocking object based on a determination that a location associated with the blocking object is at least partially within a drivable area and/or a path of the vehicle. In various examples, the perception component 422 may determine that the object is a blocking object based on a determination that the object is impeding forward progress of the vehicle along a pre-defined route and/or determine trajectory (e.g., speed and/or direction of travel) associated with travel from a location to a destination, or otherwise. In various examples, the perception component 422 may determine that the detected entity is a blocking object based on a determination that the vehicle 402 is not able to proceed around the blocking object in a lane associated with vehicle travel through an environment. In such examples, a distance between the detected entity and a lane marker associated with the lane may be less than a width of the vehicle 402 plus a minimum safe distance (e.g., safety margin) from the detected entity. In some examples, the minimum safe distance may be based on the classification associated with the detected entity.

In additional or alternative examples, the perception component 422 may provide processed sensor data that indicates one or more characteristics associated with a detected entity (e.g., a tracked object, blocking object, etc.) and/or the environment in which the object is positioned. In some examples, characteristics associated with an object may include, but are not limited to, an x-position (global and/or local position), a y-position (global and/or local position), a z-position (global and/or local position), an orientation (e.g., a roll, pitch, yaw), an object type (e.g., a classification), a velocity of the object, an acceleration of the object, an extent of the object (size), etc. Characteristics associated with the environment may include, but are not limited to, a presence of another object in the environment, a state of another object in the environment, a time of day, a day of a week, a season, a weather condition, an indication of darkness/light, etc.

In general, the planning component 424 may determine a path for the vehicle 402 to follow to traverse through an environment. For example, the planning component 424 may determine various routes and vehicle trajectories and various levels of detail. For example, the planning component 424 may determine a route to travel from a first location (e.g., a current location) to a second location (e.g., a target location). For the purpose of this discussion, a route may include a sequence of waypoints for travelling between two locations. As non-limiting examples, waypoints include streets, intersections, global positioning system (GPS) coordinates, etc. Further, the planning component 424 may generate an instruction for guiding the autonomous vehicle 402 along at least a portion of the route from the first location to the second location. In at least one example, the planning component 424 may determine how to guide the autonomous vehicle from a first waypoint in the sequence of waypoints to a second waypoint in the sequence of waypoints. In some examples, the instruction may be a vehicle trajectory, or a portion of a trajectory. In some examples, multiple trajectories may be substantially simultaneously generated (e.g., within technical tolerances) in accordance with a receding horizon technique, wherein one of the multiple trajectories is selected for the vehicle 402 to navigate.

In various examples, the route may be based at least in part on a likelihood that a blocking object will remain in the path of the vehicle 402. In some examples, the route may be associated with an action that the planning component 424 determines to take based on the blocking object. The action may include stopping and/or maintaining a stopped position prior to a location associated with the blocking object, slowing to a speed associated with the blocking object and maintaining a distance behind the blocking object (e.g., as described above with regard to FIG. 2), adjusting a position in a lane to circumnavigate the blocking object, and/or at least partially exiting a lane to circumnavigate the blocking object (e.g., change lanes, operate in a bicycle lane, on a shoulder, etc.), or the like.

In various examples, the planning component 424 may determine the action for the vehicle 402 to take based on a likelihood that the blocking object will remain in the path of the vehicle. In some examples, a prediction component 426 of the planning component 424 may determine the likelihood, such as utilizing the techniques described herein. In some examples, the prediction component 426 may determine the likelihood that the blocking object will remain in the path of the vehicle for a threshold period of time (e.g., 30 seconds, 1 minute, 2 minutes, etc.). In various examples, the prediction component 426 may be configured to determine the likelihood by utilizing machine learning techniques. In such examples, one or more machine learned models may be trained to determine a likelihood that the blocking object will remain in the path of the vehicle based on one or more features, such as object locations, object size, level of stability, detected object actions, velocity, change in velocity, and the like of the blocking object.

In various examples, the likelihood may be determined based on one or more predicted object trajectories associated with the blocking object. In such examples, the prediction component 426 may be configured to determine the predicted object trajectories. In some examples, a prediction component 426 may measure a trace of an object and generate a trajectory for the object based on observed and predicted behavior. In various examples, the predicted object trajectories may be determined based on detected movement of the blocking object over time. In such examples, the prediction component 426 may observe locations of the blocking object over time to determine the predicted object trajectories, such as that illustrated in FIG. 2.

In some examples, the predicted object trajectories may be based on a top-down representation of an environment, such as by utilizing the techniques described in U.S. Patent Application Serial Number 16/151,607 and in U.S. Patent Application Serial Number 16/504,147. In some examples, the predicted object trajectories may be determined using probabilistic heat maps (e.g., discretized probability distribution), tree search methods, temporal logic formulae, and/or machine learning techniques to predict object behavior, such as that described in the U.S. Patent Applications mentioned above. In various examples, the confidence may represent a level of certainty that the prediction component 426 may have in the accuracy of the predicted object trajectory.

In various examples, the planning component 424 may determine an action to take based at least in part on a cost associated therewith. In such examples, an action cost component 428 may be configured to determine a cost associated with each viable action. A viable action may include an action the vehicle may perform within pre-determined constraints, such as not traveling closer than a minimum safe distance from an object, not breaking an operating law, etc. The costs may include one or more of a safety cost, a comfort cost, a progress cost, and/or an operational rules cost, as described above. In various examples, the planning component 424 may select a lowest cost action as the action to perform.

In at least one example, the vehicle computing device(s) 404 may include one or more system controllers 430, which may be configured to control steering, propulsion, braking, safety, emitters, communication, and other systems of the vehicle 402. The system controller(s) 430 may communicate with and/or control corresponding systems of the drive system(s) 414 and/or other components of the vehicle 402. The memory 418 may further include one or more maps 432 that may be used by the vehicle 402 to navigate within the environment. For the purpose of this discussion, a map may be any number of data structures modeled in two dimensions, three dimensions, or N-dimensions that are capable of providing information about an environment, such as, but not limited to, topologies (such as intersections), streets, mountain ranges, roads, terrain, and the environment in general. In some instances, a map may include, but is not limited to: texture information (e.g., color information (e.g., RGB color information, Lab color information, HSV/HSL color information), and the like), intensity information (e.g., lidar information, radar information, and the like); spatial information (e.g., image data projected onto a mesh, individual "surfels" (e.g., polygons associated with individual color and/or intensity)), reflectivity information (e.g., specularity information, retroreflectivity information, BRDF information, BSSRDF information, and the like). In one example, a map may include a three-dimensional mesh of the environment. In some examples, the vehicle 402 may be controlled based at least in part on the map(s) 432. That is, the map(s) 432 may be used in connection with the localization component 420, the perception component 422, and/or the planning component 424 to determine a location of the vehicle 402, detect objects in an environment, generate routes, determine actions and/or trajectories to navigate within an environment.

In some examples, the one or more maps 432 may be stored on a remote computing device(s) (such as in a map component 438 of the computing device(s) 436) accessible via one or more networks 440. In some examples, multiple maps 432 may be stored based on, for example, a characteristic (e.g., type of entity, time of day, day of week, season of the year, etc.). Storing multiple maps 432 may have similar memory requirements, but increase the speed at which data in a map may be accessed.

As can be understood, the components discussed herein (e.g., the localization component 420, the perception component 422, the planning component 424 including the prediction component 426 and the action cost component 428, the one or more system controllers 430, the one or more maps 432 are described as divided for illustrative purposes. However, the operations performed by the various components may be combined or performed in any other component.

In some instances, aspects of some or all of the components discussed herein may include any models, techniques, and/or machine learning techniques. For example, in some instances, the components in the memory 418 (and the memory 434, discussed below) may be implemented as a neural network.

As described herein, an exemplary neural network is a biologically inspired technique which passes input data through a series of connected layers to produce an output. Each layer in a neural network may also comprise another neural network, or may comprise any number of layers (whether convolutional or not). As can be understood in the context of this disclosure, a neural network may utilize machine learning, which may refer to a broad class of such techniques in which an output is generated based on learned parameters.

Although discussed in the context of neural networks, any type of machine learning may be used consistent with this disclosure. For example, machine learning techniques may include, but are not limited to, regression techniques (e.g., ordinary least squares regression (OLSR), linear regression, logistic regression, stepwise regression, multivariate adaptive regression splines (MARS), locally estimated scatterplot smoothing (LOESS)), instance-based techniques (e.g., ridge regression, least absolute shrinkage and selection operator (LASSO), elastic net, least-angle regression (LARS)), decisions tree techniques (e.g., classification and regression tree (CART), iterative dichotomiser 3 (ID3), Chi-squared automatic interaction detection (CHAID), decision stump, conditional decision trees), Bayesian techniques (e.g., naive Bayes, Gaussian naive Bayes, multinomial naïve Bayes, average one-dependence estimators (AODE), Bayesian belief network (BNN), Bayesian networks), clustering techniques (e.g., k-means, k-medians, expectation maximization (EM), hierarchical clustering), association rule learning techniques (e.g., perceptron, back-propagation, hopfield network, Radial Basis Function Network (RBFN)), deep learning techniques (e.g., Deep Boltzmann Machine (DBM), Deep Belief Networks (DBN), Convolutional Neural Network (CNN), Stacked Auto-Encoders), Dimensionality Reduction Techniques (e.g., Principal Component Analysis (PCA), Principal Component Regression (PCR), Partial Least Squares Regression (PLSR), Sammon Mapping, Multidimensional Scaling (MDS), Projection Pursuit, Linear Discriminant Analysis (LDA), Mixture Discriminant Analysis (MDA), Quadratic Discriminant Analysis (QDA), Flexible Discriminant Analysis (FDA)), Ensemble Techniques (e.g., Boosting, Bootstrapped Aggregation (Bagging), AdaBoost, Stacked Generalization (blending), Gradient Boosting Machines (GBM), Gradient Boosted Regression Trees (GBRT), Random Forest), SVM (support vector machine), supervised learning, unsupervised learning, semi-supervised learning, etc. Additional examples of architectures include neural networks such as ResNet50, ResNet101, VGG, DenseNet, PointNet, and the like.

In at least one example, the sensor system(s) 406 may include lidar sensors, radar sensors, ultrasonic transducers, sonar sensors, location sensors (e.g., GPS, compass, etc.), inertial sensors (e.g., inertial measurement units (IMUs), accelerometers, magnetometers, gyroscopes, etc.), cameras (e.g., RGB, IR, intensity, depth, time of flight, etc.), microphones, wheel encoders, environment sensors (e.g., temperature sensors, humidity sensors, light sensors, pressure sensors, etc.), etc. The sensor system(s) 406 may include multiple instances of each of these or other types of sensors. For instance, the lidar sensors may include individual lidar sensors located at the corners, front, back, sides, and/or top of the vehicle 402. As another example, the camera sensors may include multiple cameras disposed at various locations about the exterior and/or interior of the vehicle 402. The sensor system(s) 406 may provide input to the vehicle computing device(s) 404. Additionally or in the alternative, the sensor system(s) 406 may send sensor data, via the one or more networks 440, to the one or more computing device(s) 436 at a particular frequency, after a lapse of a predetermined period of time, in near real-time, etc.

The vehicle 402 may also include one or more emitters 408 for emitting light and/or sound. The emitters 408 may include interior audio and visual emitters to communicate with passengers of the vehicle 402. By way of example and not limitation, interior emitters may include speakers, lights, signs, display screens, touch screens, haptic emitters (e.g., vibration and/or force feedback), mechanical actuators (e.g., seatbelt tensioners, seat positioners, headrest positioners, etc.), and the like. The emitter(s) 408 may also include exterior emitters. By way of example and not limitation, the exterior emitters may include lights to signal a direction of travel or other indicator of vehicle action (e.g., indicator lights, signs, light arrays, etc.), and one or more audio emitters (e.g., speakers, speaker arrays, horns, etc.) to audibly communicate with pedestrians or other nearby vehicles, one or more of which comprising acoustic beam steering technology.

In various examples, the planning component 424 may be configured to cause one or more signals to be emitted via the emitter(s) 408 toward a detected blocking object. In some examples, the planning component 424 may cause the signal(s) to be emitted prior to taking an action, such as that determined above based on the likelihood that the blocking object will remain in the path of the vehicle. As discussed above, the signal(s) may include an audio and/or visual signal. In some examples, the signal(s) may signal an intent to alert the blocking object of the vehicle 104 in the environment. In some examples, the signal(s) may provide information to the blocking object, such as a direction the blocking object may travel to move out of the path of the vehicle.

In various examples, responsive to emitting the signal(s), the perception component 422 may receive sensor data corresponding to a response and/or an indication of intent of the blocking object to change a location or not. In some examples, the indication may be received via a microphone, speaker, or other sensor system(s) 406. In at least one example, the indication may be received via an audio input via a microphone. In such an example, the perception component 422 may be configured to process the audio input to determine an intent and/or indication associated therewith, such as via natural language processing, or the like. In some examples, the indication may be received via a camera sensor, such as in an image. In such examples, the perception component 422 may be configured to determine the intent and/or indication by processing the image data. For example, the perception component 422 may indicate that the blocking object remains in a position and/or location and waves at the vehicle 402 responsive to the emitted signal(s). The perception component 422 may determine that the indication includes an intent to remain at a location blocking the path of the vehicle 402.

The vehicle 402 may also include one or more communication connections 410 that enable communication between the vehicle 402 and one or more other local or remote computing device(s). For instance, the communication connection(s) 410 may facilitate communication with other local computing device(s) on the vehicle 402 and/or the drive system(s) 414. Also, the communication connection(s) 410 may allow the vehicle to communicate with other nearby computing device(s) (e.g., computing device(s) 436, other nearby vehicles, etc.) and/or one or more remote sensor system(s) 442 for receiving sensor data.

The communications connection(s) 410 may include physical and/or logical interfaces for connecting the vehicle computing device(s) 404 to another computing device or a network, such as network(s) 440. For example, the communications connection(s) 410 can enable Wi-Fi-based communication such as via frequencies defined by the IEEE 802.11 standards, short range wireless frequencies such as Bluetooth, cellular communication (e.g., 2G, 3G, 4G, 4G LTE, 5G, etc.) or any suitable wired or wireless communications protocol that enables the respective computing device to interface with the other computing device(s).

In at least one example, the vehicle 402 may include one or more drive systems 414. In some examples, the vehicle 402 may have a single drive system 414. In at least one example, if the vehicle 402 has multiple drive systems 414, individual drive systems 414 may be positioned on opposite ends of the vehicle 402 (e.g., the front and the rear, etc.). In at least one example, the drive system(s) 414 may include one or more sensor systems to detect conditions of the drive system(s) 414 and/or the surroundings of the vehicle 402. By way of example and not limitation, the sensor system(s) may include one or more wheel encoders (e.g., rotary encoders) to sense rotation of the wheels of the drive systems, inertial sensors (e.g., inertial measurement units, accelerometers, gyroscopes, magnetometers, etc.) to measure orientation and acceleration of the drive module, cameras or other image sensors, ultrasonic sensors to acoustically detect objects in the surroundings of the drive module, lidar sensors, radar sensors, etc. Some sensors, such as the wheel encoders may be unique to the drive system(s) 414. In some cases, the sensor system(s) on the drive system(s) 414 may overlap or supplement corresponding systems of the vehicle 402 (e.g., sensor system(s) 406).

The drive system(s) 414 may include many of the vehicle systems, including a high voltage battery, a motor to propel the vehicle, an inverter to convert direct current from the battery into alternating current for use by other vehicle systems, a steering system including a steering motor and steering rack (which can be electric), a braking system including hydraulic or electric actuators, a suspension system including hydraulic and/or pneumatic components, a stability control system for distributing brake forces to mitigate loss of traction and maintain control, an HVAC system, lighting (e.g., lighting such as head/tail lights to illuminate an exterior surrounding of the vehicle), and one or more other systems (e.g., cooling system, safety systems, onboard charging system, other electrical components such as a DC/DC converter, a high voltage junction, a high voltage cable, charging system, charge port, etc.). Additionally, the drive system(s) 414 may include a drive module controller which may receive and preprocess data from the sensor system(s) and to control operation of the various vehicle systems. In some examples, the drive module controller may include one or more processors and memory communicatively coupled with the one or more processors. The memory may store one or more systems to perform various functionalities of the drive system(s) 414. Furthermore, the drive system(s) 414 may also include one or more communication connection(s) that enable communication by the respective drive module with one or more other local or remote computing device(s).

In at least one example, the direct connection 412 may provide a physical interface to couple the one or more drive system(s) 414 with the body of the vehicle 402. For example, the direct connection 412 may allow the transfer of energy, fluids, air, data, etc. between the drive system(s) 414 and the vehicle. In some instances, the direct connection 412 may further releasably secure the drive system(s) 414 to the body of the vehicle 402.

In at least one example, the localization component 420, the perception component 422, the planning component 424, the one or more system controllers 430, the one or more maps 432, the prediction component 426, and the action cost component 428, may process data (e.g., sensor data), as described above, and may send their respective outputs, over the one or more network(s) 440, to the computing device(s) 436. In at least one example, the localization component 420, the perception component 422, the planning component 424, the one or more system controllers 430, the one or more maps 432, the prediction component 426, and the action cost component 428 may send their respective outputs to the computing device(s) 436 at a particular frequency, after a lapse of a predetermined period of time, in near real-time, etc.

In some examples, the vehicle 402 may send sensor data to the computing device(s) 436 via the network(s) 440. In some examples, the vehicle 402 may receive sensor data from the computing device(s) 436 and/or remote sensor system(s) 442 via the network(s) 440. The sensor data may include raw sensor data and/or processed sensor data and/or representations of sensor data. In some examples, the sensor data (raw or processed) may be sent and/or received as one or more log files.

The computing device(s) 436 may include one or more processors 444 and a memory 434 storing the map component 438 and a sensor data processing component 446. In various examples, the sensor data processing component 446 may be configured to receive data from one or more remote sensors, such as sensor system(s) 406 and/or remote sensor system(s) 442. In some examples, the sensor data processing component 446 may be configured to process the data and send the processed data to the planning component 424 for determining an action for the vehicle 402 to take. In some examples, the sensor data processing component 446 may be configured to process the data and send processed sensor data to the vehicle computing device(s) 404, such as for use by the action cost component 428, and/or the prediction component 426. In some examples, the sensor data processing component 446 may be configured to send raw sensor data to the vehicle computing device(s) 404.

The processor(s) 416 of the vehicle 402 and the processor(s) 444 of the computing device(s) 436 may be any suitable processor capable of executing instructions to process data and perform operations as described herein. By way of example and not limitation, the processor(s) 416 and 444 may comprise one or more Central Processing Units (CPUs), Graphics Processing Units (GPUs), or any other device or portion of a device that processes electronic data to transform that electronic data into other electronic data that may be stored in registers and/or memory. In some examples, integrated circuits (e.g., ASICs, etc.), gate arrays (e.g., FPGAs, etc.), and other hardware devices may also be considered processors in so far as they are configured to implement encoded instructions.

Memory 418 and 434 are examples of non-transitory computer-readable media. The memory 418 and 434 may store an operating system and one or more software applications, instructions, programs, and/or data to implement the methods described herein and the functions attributed to the various systems. In various implementations, the memory may be implemented using any suitable memory technology, such as static random access memory (SRAM), synchronous dynamic RAM (SDRAM), nonvolatile/Flash-type memory, or any other type of memory capable of storing information. The architectures, systems, and individual elements described herein may include many other logical, programmatic, and physical components, of which those shown in the accompanying figures are merely examples that are related to the discussion herein.

In some instances, the memory 418 and 434 may include at least a working memory and a storage memory. For example, the working memory may be a high-speed memory of limited capacity (e.g., cache memory) that is used for storing data to be operated on by the processor(s) 416 and 444. In some instances, the memory 418 and 434 may include a storage memory that may be a lower-speed memory of relatively large capacity that is used for long-term storage of data. In some cases, the processor(s) 416 and 444 cannot operate directly on data that is stored in the storage memory, and data may need to be loaded into a working memory for performing operations based on the data, as discussed herein.

It should be noted that while FIG. 4 is illustrated as a distributed system, in alternative examples, components of the vehicle 402 may be associated with the computing device(s) 436 and/or components of the computing device(s) 436 may be associated with the vehicle 402. That is, the vehicle 402 may perform one or more of the functions associated with the computing device(s) 436, and vice versa.

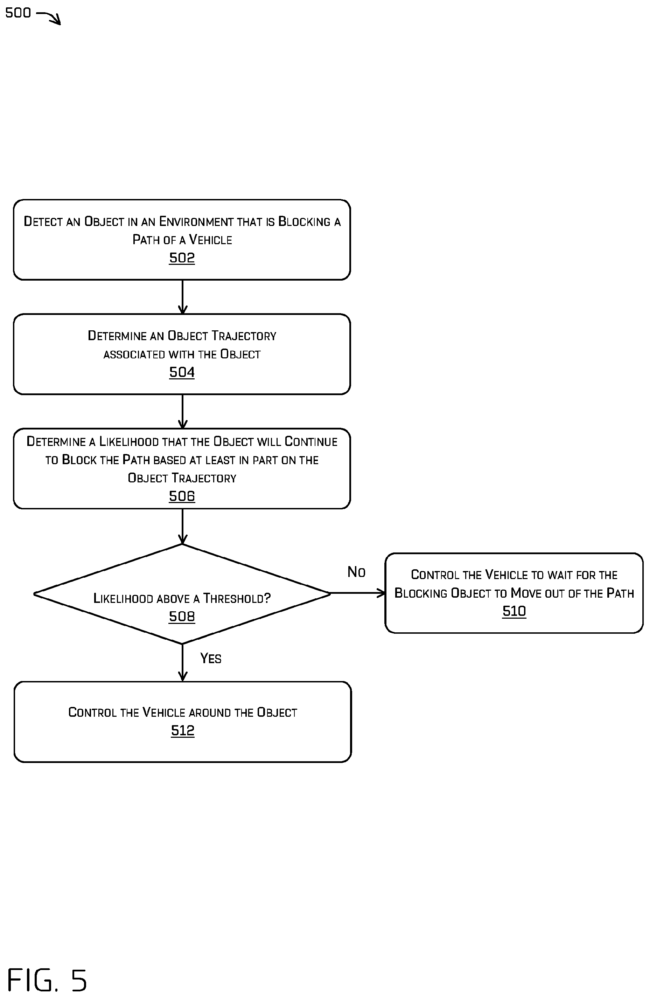

FIGS. 5-7 illustrate example processes in accordance with embodiments of the disclosure. These processes are illustrated as logical flow graphs, each operation of which represents a sequence of operations that may be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations may be combined in any order and/or in parallel to implement the processes.

FIG. 5 depicts an example process 500 for controlling a vehicle according to an action based at least in part on a cost associated with the action. Some or all of the process 500 may be performed by one or more components in FIG. 4, as described herein. For example, some or all of the process 500 may be performed by the vehicle computing device(s) 404 and/or computing device(s) 436.

At operation 502, the process may include detecting an object in an environment that is blocking a path of a vehicle. In some examples, the object may be detected based at least in part on sensor data associated with a sensor of a vehicle. The sensor may include a camera, motion detector, lidar, radar, time of flight, or the like. In some examples, the vehicle computing system may receive sensor data from one or more remote sensors, such as, for example sensors mounted on another autonomous vehicle, and/or sensors mounted in the environment.

In various examples, the vehicle computing system may determine that the object is blocking the path of the vehicle based on a determination that the object is impeding forward progress of the vehicle. In such examples, the forward progress may be impeded based on a determination that the vehicle must slow a forward speed and/or stop to prevent a collision with the object. The blocking object(s) may be substantially stationary (e.g., pedestrians standing and/or milling about in front of the vehicle, etc.) and/or dynamic (e.g., bicyclist in the road in front of the vehicle traveling at a speed slower than that associated with a trajectory of the vehicle, pedestrians walking in the road in front of the vehicle, such as those navigating around a construction zone, etc.). In various examples, the vehicle computing system may determine that the object is blocking the path of the vehicle based at least in part on a location associated with the object being at least partially in a path and/or drivable area of the vehicle. In various examples, the vehicle computing system may determine that the object is blocking the path of the vehicle based on a determination that the vehicle is unable to circumnavigate the object while remaining in the lane. In such examples, the object may be completely blocking a lane associated with vehicle travel.

At operation 504, the process may include determining an object trajectory (e.g., predicted trajectory(ies)) associated with the object. The object trajectory may be determined based on the sensor data. The object trajectory may represent a potential path that the detected object may travel through the environment. In various examples, the object trajectory may be determined utilizing a top-down representation of an environment, a heat map, temporal logic formulae, tree search methods, machine learning techniques, or other means of determining active prediction associated with objects in an environment, as described in the U.S. Patent Applications incorporated mentioned herein. In such examples, one or more of the sensor data, representations of the sensor data (e.g., bounding boxes, extents, etc.), a map, road network information, and the path associated with the action (all of which may comprise a sequence of data over a period of time) may be input into a machine learned model trained to output a predicted trajectory of the selected object. In various examples, the object trajectory, such as that associated with a dynamic blocking object, may be determined based on a change in location of an object over time. In such examples, the object trajectory may be based on the detected movement of the object over time.

At operation 506, the process may include determining a likelihood that the object will continue to block the path based at least in part on the object trajectory. In some examples, the vehicle computing system is configured to determine the likelihood that the object will continue to block the path for greater than a threshold period of time (e.g., 45 seconds, 90 seconds, etc.). As discussed above, the likelihood may be determined based on the predicted object trajectory and/or a confidence associated therewith. In various examples, the likelihood may be determined based on one or more factors, such as a position of the blocking object, one or more locations associated with the blocking object (e.g., known location of tourist attention, picture taking, etc.), a classification of the blocking object, a size of the blocking object (e.g., width, height, number of pedestrians in a group, etc.), a level of stability (e.g., amount of movement, etc.), a velocity of the blocking object, a change in velocity of the blocking object (e.g., velocity covariance), a detected object action (e.g., taking pictures, pointing at another object, etc.), a known time associated with the detected object action (e.g., time associated with taking pictures at a landmark, etc.), or the like. As discussed above, the likelihood may be determined utilizing machine learning techniques.

At operation 508, the process may include determining whether the likelihood is above a threshold (45%, 57%, 62%, etc.). The threshold may include a threshold associated with a determination to either stop and/or maintain a stopped position (e.g., for a substantially static object) or slow to a speed substantially equivalent to the speed of the object (e.g., for a dynamic object) and follow at a safe speed behind the dynamic object, or to determine a path to circumnavigate the blocking object.

Based on a determination that the likelihood is at or below a threshold ("No" at operation 508), the process, at operation 510, may include controlling the vehicle to wait of the blocking object to move out of the path. In examples in which the blocking object is a dynamic object, the vehicle may substantially maintain a same direction of travel in a lane and may slow a speed to substantially the same speed as the dynamic object. In various examples, the vehicle computing system may cause the vehicle to maintain a safe distance behind the vehicle. In such examples, the vehicle computing system may ensure that the vehicle is optimizing a safety protocol associated with blocking objects.

In examples in which the blocking object is a substantially static object (e.g., maintaining substantially the same location), the vehicle computing system may cause the vehicle to stop and/or maintain a stopped position prior to a location associated with the blocking object. In such examples, the vehicle computing system will cause the vehicle to wait for the blocking object to move out of the path of the vehicle prior to continuing forward on a path.

Based on a determination that the likelihood is at or above the threshold ("Yes" at operation 508), the process, at operation 512, may include controlling the vehicle around the object. As discussed herein, the vehicle computing system may determine a number of viable actions the vehicle may take, such as adjusting a position in a lane around the blocking object, changing lanes, partially changing lanes, etc. In various examples, the vehicle computing system may determine a cost associated with each viable action (and in some cases also a cost associated with waiting for the blocking object to move out of the path) and may control the vehicle around the object based on the cost determination (e.g., lowest cost action).

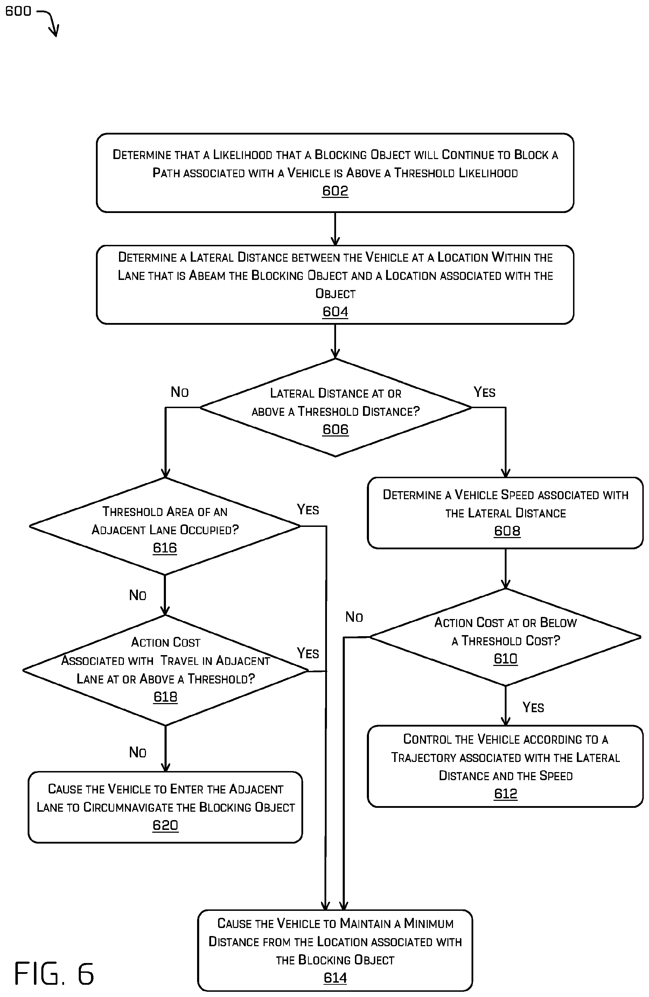

FIG. 6 depicts an example process 600 for depicts an example process for controlling a vehicle around a blocking object according to an action based at least in part on a cost associated with the action. Some or all of the process 600 may be performed by one or more components in FIG. 4, as described herein. For example, some or all of the process 600 may be performed by the vehicle computing device(s) 404.

At operation 602, the process may include determining that a likelihood that the object will continue to block a path associated with a vehicle is above a threshold likelihood (e.g., operation 512 of FIG. 5). In some examples, a determination of continued blocking may be based on a likelihood that the blocking object will remain (at least partially) in the path associated with the vehicle for a threshold amount of time (e.g., 15 seconds, 30 seconds, 1 minute, etc.).

As discussed above, the likelihood may be determined based on one or more factors, such as a position of the blocking object, one or more locations associated with the blocking object (e.g., known location of tourist attention, picture taking, etc.), a classification of the blocking object, a size of the blocking object (e.g., width, height, number of pedestrians in a group, etc.), a level of stability (e.g., amount of movement, etc.), a velocity of the blocking object, a change in velocity of the blocking object (e.g., velocity covariance), a detected object action (e.g., taking pictures, pointing at another object, etc.), a known time associated with the detected object action (e.g., time associated with taking pictures at a landmark, etc.), or the like. As discussed above, the likelihood may be determined based on a predicted object trajectory and/or a confidence associated therewith. In various examples, the likelihood may be determined utilizing machine learning techniques or other methods for determining a likelihood that the object will continue to block the path of the vehicle.

At operation 604, the process may include determining a lateral distance between the vehicle at a location within the lane that is abeam the object (e.g., blocking object) and a location associated with the object. In some examples, the lateral distance from the object may include a maximum lateral distance. In such examples, the vehicle may operate at a location in the lane that is farthest from the blocking object. In other examples, the distance may be less than the maximum lateral distance.

In various examples, the vehicle computing system may determine a distance between the blocking object and an opposite edge of the lane (e.g., distance from the blocking object to a lane marker). In such examples, the vehicle computing system may subtract a width of the vehicle and/or a safety buffer (e.g., 3 inches, 6 inches, etc.) from the distance between the blocking object and the lane marker to determine the lateral distance between the vehicle at the location abeam the blocking object and the location associated with the blocking object.

At operation 606, the process may include determining whether the lateral distance in the lane is at or above a threshold distance. In various examples, the threshold distance may represent a minimum safe distance that the vehicle should maintain from an object. In some examples, the threshold distance may be based on a classification associated with the blocking object. In such examples, the vehicle computing system may determine the classification associated with the blocking object and determine the threshold distance associated therewith.

Based on a determination that the lateral distance is at or above the threshold distance ("Yes" at operation 606), the process, at operation 608, may include determining a vehicle speed associated with the distance. As discussed above, the vehicle speed may be determined based on a cost optimization associated with the lateral distance (e.g., one or more lateral distances from the location associated with the blocking object). In various examples, the vehicle speed at the lateral distance may include the speed associated with a lowest action cost.

In various examples, the vehicle speed and the lateral distance may be related, such that as a lateral distance from the blocking object increases, a vehicle speed may increase. In some examples, the vehicle speed may include a pre-determined vehicle speed associated with passing a blocking object in the lane. In some examples, the pre-determined vehicle speed may include a maximum safe speed for operating proximate an object. In various examples, the vehicle speed may be based on the classification associated with the blocking object. In some examples, a first classification may include a first set of pre-determined vehicle speeds associated with the passage thereof and a second classification may include a second set of pre-determined vehicle speeds associated with the passage thereof. In such examples, the first set of pre-determined vehicle speeds and the second set of pre-determined vehicle speeds may include different vehicle speeds and/or at least some of the same vehicle speeds.

At operation 610, the process may include determining whether an action cost associated with circumnavigating the blocking object in the lane is at or below a threshold cost. The threshold cost may include a pre-determined maximum cost associated with an action. The threshold cost may ensure maximized safety and performance of the vehicle operating in the environment. In various examples, the threshold cost may be associated with a constraint on a vehicle action. In such examples, the constraint may prevent the vehicle computing system from selecting one or more actions based on high costs (e.g., safety, comfort, progress, operational rules costs, etc.). For example, a threshold cost may be associated with a maximum comfort cost and the vehicle computing system may be prevented from performing an action that is overly uncomfortable for a passenger of the vehicle, a person associated with the object, or the like.

Based on a determination that the action cost associated with circumnavigating the blocking object in the lane is at or below the threshold cost ("Yes" at operation 610), the process, at operation 612, may include controlling the vehicle according to a trajectory associated with the lateral distance from the object and the vehicle speed. As discussed above, the action cost may be based on a safety cost, a comfort cost, a progress cost, and/or an operational rules cost associated with the action. In various examples, the threshold cost may include a pre-determined maximum cost associated with performing an action. In such examples, the threshold cost may ensure that an action performed by the vehicle optimizes safety, comfort, and progress of the vehicle, while operating in the environment.

Based on a determination that the action cost associated with circumnavigating the blocking object in the lane is above the threshold cost ("No" at operation 610), the process, at operation 614, may include maintaining a minimum distance from the location associated with the blocking object. In such examples, the vehicle computing system may determine to yield to the blocking object and wait for the blocking object to move out of the path of the vehicle. In various examples, the vehicle computing system may cause the vehicle to stop prior to the location associated with the blocking object. In such examples, the action may represent a most conservative action to ensure safety of the blocking object, the vehicle, occupants of the vehicle, and other objects in the environment. In various examples, the vehicle computing system may cause the vehicle to slow a forward speed to substantially match that of the object, such as a dynamic object traveling in substantially the same direction as the vehicle. In such examples, the vehicle computing system may cause the vehicle to travel behind the blocking object at the distance (e.g., a minimum safe distance).

Based on a determination that the lateral distance is below the threshold distance ("No" at operation 606), the process, at operation 616, may include determining whether the threshold area of an adjacent lane is occupied. In some examples, the threshold area may include at least a width of the vehicle that will be in the adjacent lane and/or a safety buffer (e.g., 4 inches, 8 inches, 16 inches, etc.) from the other objects. In some examples, the threshold area may be associated with an area necessary to transition at least partially into the adjacent lane without encroaching within a threshold distance (e.g., minimum safe distance) in front of, behind, or laterally from another object 108.

In examples in which the adjacent lane includes opposite direction traffic, the threshold area may include an area encompassing a distance that the vehicle will travel around the blocking object plus a distance that another object would cover (e.g., at the speed limit associated with the environment) in a time necessary for the vehicle to circumnavigate the blocking object. In some examples, based on a determination that another object is occupying the threshold area, vehicle computing system may cause the vehicle to yield to the other object prior to proceeding around the blocking object.

Based on a determination that the threshold area of the adjacent lane is occupied ("Yes" at operation 616), the process may include causing the vehicle to stop prior to the location associated with the blocking object, such as that described at operation 614.

Based on a determination that the threshold area of the adjacent lane is unoccupied ("No" at operation 616), the process may include determining whether an action cost associated with travel in the adjacent lane is at or above a threshold cost. As discussed above, the action cost may be based on a safety cost, a comfort cost, a progress cost, and/or an operational rules cost associated with the action. In various examples, the threshold cost may include a pre-determined maximum cost associated with performing an action. In such examples, the threshold cost may ensure that an action performed by the vehicle optimizes safety, comfort, and progress of the vehicle, while operating within established rules associated with the environment.

Based on a determination that the action cost is at or above the threshold cost ("Yes" at operation 618), the process may include causing the vehicle to stop prior to the location associated with the blocking object, such as that described at operation 614.

Based on a determination that the action cost is below the threshold cost ("No" at operation 620), the process, at operation 620, may include causing the vehicle to enter the adjacent lane circumnavigate the blocking object. In various examples, the vehicle computing device may determine one or more vehicle trajectories (e.g., modified vehicle trajectories) for the vehicle to follow to circumnavigate the blocking object. In some examples, the modified vehicle trajectories may be associated with a second path and/or a second drivable area around the blocking object. In various examples, the vehicle computing system may send signals to the drive system(s) of the vehicle to cause the vehicle to travel according to the modified trajectories, such as along the second path and/or within the drivable area.

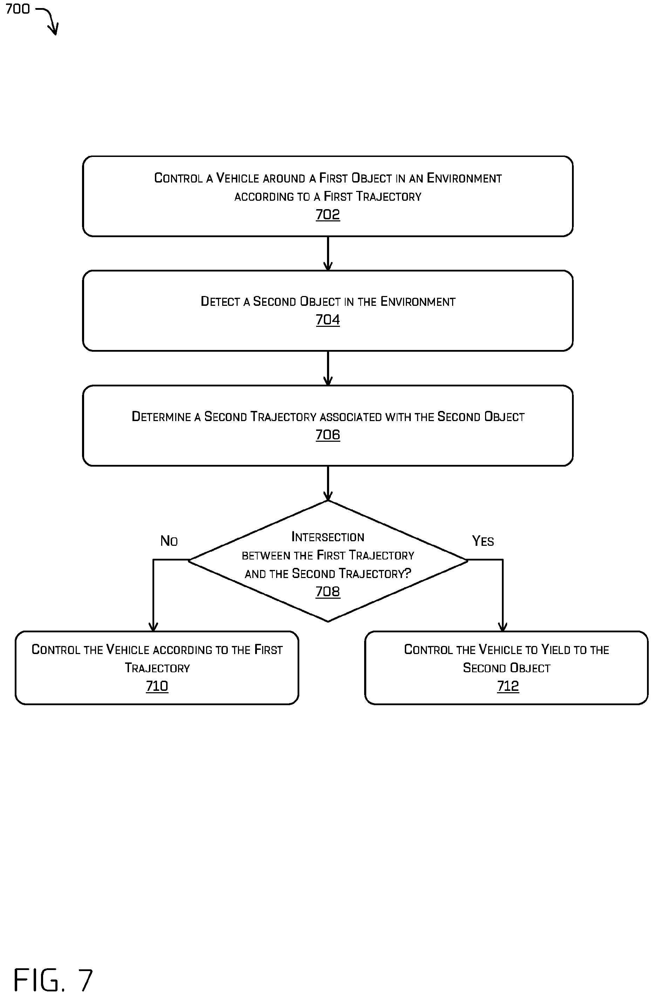

FIG. 7 depicts an example process 700 for controlling a vehicle around a blocking object and yielding to a second object detected while navigating around the blocking object. Some or all of the process 700 may be performed by one or more components in FIG. 4, as described herein. For example, some or all of the process 700 may be performed by the vehicle computing device(s) 404.

At operation 702, the process may include controlling the vehicle around a first object in an environment according to a first trajectory. In various examples, the first object may include a blocking object. In some examples, the vehicle may be controlled as described above with respect to operation 512 of FIG. 5 and/or operations 612 and/or 620 of FIG. 6.

At operation 704, the process may include detecting a second object in the environment. In various examples, the second object may be detected based at least in part on sensor data associated with a sensor of a vehicle. The sensor may include a camera, motion detector, lidar, radar, time of flight, or the like. In some examples, the vehicle computing system may receive sensor data from one or more remote sensors, such as, for example sensors mounted on another autonomous vehicle, and/or sensors mounted in the environment.

At operation 706, the process may include determining a second trajectory associated with the second object. The second trajectory may be determined based on the sensor data. The second trajectory may represent a potential path that the detected object may travel through the environment. In various examples, the second trajectory may be determined based on a change in location of the second object over time. In such examples, the second trajectory may be based on the detected movement of the second object over time. In various examples, the second trajectory may be determined utilizing a top-down representation of an environment, a heat map, temporal logic formulae, tree search methods, machine learning techniques, or other means of determining active prediction associated with objects in an environment, as described in the U.S. Patent Applications mentioned herein. In such examples, one or more of the sensor data, representations of the sensor data (e.g., bounding boxes, extents, etc.), a map, road network information, and the path associated with the action (all of which may comprise a sequence of data over a period of time) may be input into a machine learned model trained to output a predicted trajectory of the second object.

At operation 708, the process may include determining whether there is an intersection between the first trajectory (associated with the vehicle) and the second trajectory (associated with the second object). In some examples, the intersection may represent a future state of the vehicle and the second object in which locations associated therewith are within a threshold distance of one another. In some examples, the intersection may represent a future state of the vehicle and the second object occupying a same space at a same time while traveling on respective trajectories.

Based on a determination that the second trajectory and the first trajectory do not converge ("No" at operation 708), the process, at operation 710, may include controlling the vehicle according to the first trajectory. In some examples, the vehicle may circumnavigate the blocking object and continue along a path to a destination without yielding to the second object.

Based on a determination that the second trajectory and the first trajectory converge ("Yes" at operation 708), the process, at operation 712 may include controlling the vehicle to yield to the second object. In various examples, yielding to the second object may include slowing a speed associated with the first trajectory to permit the second object to cross the path of the vehicle. In some examples, yielding to the second object may include stopping the vehicle prior to a location associated with the second object and/or one or more locations associated with the second trajectory.

### EXAMPLE CLAUSES

A: A vehicle comprising: a sensor; one or more processors; and memory storing processor-executable instructions that, when executed by the one or more processors, configure the vehicle to: receive sensor data of an environment from the sensor; identify an object at a location in the environment based at least in part on the sensor data, wherein the object is at least partially blocking a first vehicle trajectory associated with the vehicle; determine a predicted object trajectory associated with the object; determine that the predicted object trajectory indicates a continued blocking of the first vehicle trajectory; determine a confidence associated with the predicted object trajectory; determine a second vehicle trajectory based at least in part on the predicted object trajectory and the confidence, wherein the second vehicle trajectory is associated with the vehicle navigating around the object; and control the vehicle according to the second vehicle trajectory.
B: The vehicle as paragraph A describes, wherein the instructions further configure the vehicle to: determine a first distance between a lane marker depicting an edge of a lane and the location associated with the object; determine a second distance comprising the first distance minus a width of the vehicle; and determine a vehicle speed associated with the distance; wherein the second vehicle trajectory is associated with navigating around the object at the distance and the vehicle speed.
C: The vehicle as paragraph A or B describe, wherein the instructions further configure the vehicle to: determine a classification associated with the object; and determine a threshold distance between the vehicle and the location associated with the object based at least in part on the classification, wherein the second vehicle trajectory is based at least in part on the threshold distance.
D: The vehicle as any one of paragraphs A-C describe, wherein the instructions further configure the vehicle to: emit at least one of an audio signal or a visual signal in a direction associated with the object; and determine that a motion of the object is in accordance with the predicted object trajectory; wherein determining the second vehicle trajectory is based at least in part on determining that the motion of the object is in accordance with the predicted object trajectory.
E: The vehicle as any one of paragraphs A-D describe, wherein the predicted object trajectory is based at least in part on at least one of: a machine learned algorithm; a top-down representation of the environment; a discretized probability distribution; a temporal logic formula; or a tree search method.
F: A computer-implemented method comprising: identifying an object at a location in an environment based at least in part on sensor data; determining that the location is associated with a vehicle trajectory based at least in part on a determination that a vehicle traveling on the vehicle trajectory would at least partially pass through the location; determining, based at least in part on the location being associated with the vehicle trajectory, that the object is at least partially blocking the vehicle trajectory; determining a likelihood that the object will continue to at least partially block the vehicle trajectory; and controlling the vehicle based at least in part on the likelihood that the object will continue to at least partially block the vehicle trajectory.
G: The computer-implemented method as paragraph F describes, wherein the vehicle trajectory is a first vehicle trajectory and wherein determining that the object is at least partially blocking the vehicle trajectory is based at least in part on determining that the object impedes the progress of the vehicle along the first vehicle trajectory, the method further comprising: determining a threshold distance to navigate around the object; and determining a second vehicle trajectory based at least in part on the threshold distance, wherein controlling the vehicle comprises causing the vehicle to traverse the environment based at least in part on the second vehicle trajectory.
H: The computer-implemented method as either of paragraphs F or G describe, wherein determining the likelihood that the object will continue to at least partially block the vehicle trajectory comprises: determining an object trajectory; and determining, based at least in part on the object trajectory, that the object will substantially remain at the location that is associated with the vehicle trajectory and will continue to impede the progress of the vehicle traveling on the vehicle trajectory for at least a threshold time.
I: The computer-implemented method as any one of paragraphs F-H describe, wherein controlling the vehicle comprises causing the vehicle to circumnavigate the object according a second vehicle trajectory, the method further comprising: identifying a second object based at least in part on the sensor data; determining a second object trajectory associated with the second object; determining an intersection between the second object trajectory and the second vehicle trajectory; controlling the vehicle based at least in part on the intersection.
J: The computer-implemented method as any one of paragraphs F-I describe, wherein the location of the object is a first location of the object, the method further comprising: determining a second location of the object; determining that the second location of the object does not impede the progress of the vehicle traveling on the vehicle trajectory; determining, based at least in part on the second location of the object not impeding the progress of the vehicle, that the object is not at least partially blocking the vehicle trajectory; and controlling the vehicle according to the vehicle trajectory.
K: The computer-implemented method as any one of paragraphs F-J describe, wherein the likelihood that the object will continue to block the vehicle trajectory is based at least in part on at least one of: a classification of the object; a position of the object; the location of the object in the environment; a size of the object; a level of stability associated with the object; a velocity of the object; or a change in the velocity of the object.
L: The computer-implemented method as any one of paragraphs F-K describe, further comprising: emitting at least one of an audio signal or a visual signal in a direction based at least in part on the location of the object; and performing at least one of: based at least in part on determining that the location of the object remains substantially the same, controlling the vehicle around the location; or based at least in part on determining a change in the location of the object to a second location that does not at least partially block the vehicle trajectory, controlling the vehicle according to the vehicle trajectory.
M: The computer-implemented method as any one of paragraphs F-L describe, further comprising: receiving at least one of an audio signal via a microphone or a visual signal via a camera; and determining that the at least one of the audio signal or the visual signal comprises an indication that the object does not intend to move out of the vehicle trajectory, wherein the likelihood that the object will continue to at least partially block the vehicle trajectory is based at least in part on the indication.
N: The computer-implemented method as any one of paragraphs F-M describe, wherein controlling the vehicle comprises determining an action for the vehicle to take, wherein the action comprises at least one of: maintaining a stopped position in the vehicle trajectory; or determining a second vehicle trajectory around the object; and wherein the action is determined based at least in part on at least one of: a safety cost associated with the action, wherein the safety cost is based at least in part on a relative state between the object and the vehicle; a comfort cost associated with the action, wherein the comfort cost is based at least in part on the relative state between the object and the vehicle; a progress cost associated with the action, wherein the progress cost is based at least in part on a vehicle delay associated with the action; or an operational rules cost associated with the action, wherein the operational rules cost is based at least in part on one or more regulations associated with the environment.
O: A system or device comprising: a processor; and a non-transitory computer-readable medium storing instructions that, when executed, cause processor to perform a computer-implemented method as any one of paragraphs F-N describe.
P: A system or device comprising: a means for processing; and a means for storing coupled to the means for processing, the means for storing including instructions to configure one or more devices to perform a computer-implemented method as any one of paragraphs F-N describe.
Q: A non-transitory computer-readable medium storing instructions that, when executed, cause one or more processors to perform operations comprising: identifying an object at a location in an environment based at least in part on sensor data; determining that the location of the object impedes travel of the vehicle on a vehicle trajectory of the vehicle; determining, based at least in part on the location of the object impeding travel of the vehicle on the vehicle trajectory, that the object is at least partially blocking the vehicle trajectory; determining a likelihood that the object will continue to at least partially block the vehicle trajectory; and controlling the vehicle based at least in part on the likelihood that the object will continue to at least partially block the vehicle trajectory.
R: The non-transitory computer-readable medium as paragraph Q describes, wherein the instructions further cause the processors to perform operations comprising: determining a first distance between a lane marker depicting an edge of a lane and the location of the object; determining a second distance comprising the first distance minus a width of the vehicle; and determining a second vehicle trajectory based at least in part on the second distance, wherein controlling the vehicle comprises causing the vehicle to travel according to the second vehicle trajectory.
S: The non-transitory computer-readable medium as either paragraphs Q or R describe, wherein the instructions further cause the processors to perform operations comprising: determining a vehicle speed associated with the distance, wherein the second vehicle trajectory comprises the vehicle speed.
T: The non-transitory computer-readable medium as any one of paragraphs Q-S describe, wherein controlling the vehicle comprises: determining a first trajectory for the vehicle to take to navigate around the object; determining a second trajectory for the vehicle to take to navigate around the object determining a first cost associated with the first trajectory and a second cost associated with the second trajectory, wherein the first cost and the second cost comprise at least one of a safety cost, a comfort cost, a progress cost, or an operational rules cost associated with the respective trajectories; determining that the first cost associated with the first trajectory is less than the second cost associated with the second trajectory; and causing the vehicle to navigate around the object according to the first trajectory.
U: The non-transitory computer-readable medium as any one of paragraphs Q-T describe, wherein the instructions further cause the processors to perform operations comprising: receiving an indication that the object does not intend to move out of the vehicle trajectory, wherein the likelihood that the object will continue to at least partially block the vehicle trajectory is based at least in part on the indication.
V: The non-transitory computer-readable medium as any one of paragraphs Q-U describe, wherein the likelihood that the object will continue to at least partially block the vehicle trajectory is based at least in part on at least one of: a classification of the object; a position of the object; the location associated with the object; a size of the object; a level of stability associated with the object; a velocity of the object; or a change in the velocity of the object.

While the example clauses described above are described with respect to one particular implementation, it should be understood that, in the context of this document, the content of the example clauses may also be implemented via a method, device, system, a computer-readable medium, and/or another implementation. Additionally, any of examples A-V may be implemented alone or in combination with any other one or more of the examples A-V.

### CONCLUSION

While one or more examples of the techniques described herein have been described, various alterations, additions, permutations and equivalents thereof are included within the scope of the claims.

## Claims

1. A vehicle comprising:
a sensor;
one or more processors; and
memory storing processor-executable instructions that, when executed by the one or more processors, configure the vehicle to:
receive sensor data of an environment from the sensor;
identify an object at a location in the environment based at least in part on the sensor data, wherein the object is currently at least partially blocking a first vehicle trajectory associated with the vehicle;
determine a predicted object trajectory associated with the object;
determine that the predicted object trajectory indicates a blocking of the first vehicle trajectory that is to continue for at least a predetermined threshold period of time;
determine a confidence associated with the predicted object trajectory;
determine a second vehicle trajectory based at least in part on the confidence and the predicted object trajectory indicative of the blocking of the first vehicle trajectory that is to continue for at least the predetermined threshold period of time, wherein the second vehicle trajectory is associated with the vehicle navigating around the object; and
control the vehicle according to the second vehicle trajectory.

2. The vehicle as claim 1 recites, wherein the instructions further configure the vehicle to:
determine a first distance between a lane marker depicting an edge of a lane and the location associated with the object;
determine a second distance comprising the first distance minus a width of the vehicle; and
determine a vehicle speed associated with the distance;
wherein the second vehicle trajectory is associated with navigating around the object at the distance and the vehicle speed.

3. The vehicle as either claim 1 or claim 2 recites, wherein the instructions further configure the vehicle to:
determine a classification associated with the object; and
determine a threshold distance between the vehicle and the location associated with the object based at least in part on the classification,
wherein the second vehicle trajectory is based at least in part on the threshold distance.

4. The vehicle as any one of claims 1-3 recite, wherein the instructions further configure the vehicle to:
emit at least one of an audio signal or a visual signal in a direction associated with the object; and
determine that a motion of the object is in accordance with the predicted object trajectory;
wherein determining the second vehicle trajectory is based at least in part on determining that the motion of the object is in accordance with the predicted object trajectory.

5. The vehicle as any one of claims 1-4 recite, wherein the predicted object trajectory is based at least in part on at least one of:
a machine learned algorithm;
a top-down representation of the environment;
a discretized probability distribution;
a temporal logic formula; or
a tree search method.

6. A method comprising:
identifying an object at a current location in an environment based at least in part on sensor data;
determining that the current location is associated with a vehicle trajectory based at least in part on a determination that a vehicle traveling on the vehicle trajectory would at least partially pass through the current location;
determining, based at least in part on the current location being associated with the vehicle trajectory, that the object is at least partially blocking the vehicle trajectory;
determining a likelihood that the object will continue to at least partially block the vehicle trajectory;
controlling the vehicle based at least in part on the likelihood that the object will continue to at least partially block the vehicle trajectory;
wherein determining the likelihood that the object will continue to at least partially block the vehicle trajectory comprises:
determining an object trajectory; and
determining, based at least in part on the object trajectory, that the object will substantially remain at the current location that is associated with the vehicle trajectory and will continue to impede the progress of the vehicle traveling on the vehicle trajectory for at least a predetermined threshold time.

7. The method as claim 6 recites, wherein the vehicle trajectory is a first vehicle trajectory and wherein determining that the object is at least partially blocking the vehicle trajectory is based at least in part on determining that the object impedes the progress of the vehicle along the first vehicle trajectory, the method further comprising:
determining a threshold distance to navigate around the object; and
determining a second vehicle trajectory based at least in part on the threshold distance,
wherein controlling the vehicle comprises causing the vehicle to traverse the environment based at least in part on the second vehicle trajectory.

8. The method as any one of claims 6-7 recite, wherein controlling the vehicle comprises causing the vehicle to circumnavigate the object according a second vehicle trajectory, the method further comprising:
identifying a second object based at least in part on the sensor data;
determining a second object trajectory associated with the second object;
determining an intersection between the second object trajectory and the second vehicle trajectory;
controlling the vehicle based at least in part on the intersection.

9. The method as any one of claims 6-8 recite, wherein the current location of the object is a first location of the object, the method further comprising:
determining a second location of the object;
determining that the second location of the object does not impede the progress of the vehicle traveling on the vehicle trajectory;
determining, based at least in part on the second location of the object not impeding the progress of the vehicle, that the object is not at least partially blocking the vehicle trajectory; and
controlling the vehicle according to the vehicle trajectory.

10. The method as any one of claims 6-9 recite, wherein the likelihood that the object will continue to block the vehicle trajectory is based at least in part on at least one of:
a classification of the object;
a position of the object;
the current location of the object in the environment;
a size of the object;
a level of stability associated with the object;
a velocity of the object; or
a change in the velocity of the object.

11. The method as any one of claims 6-10 recite, further comprising:
receiving at least one of an audio signal via a microphone or a visual signal via a camera; and
determining that the at least one of the audio signal or the visual signal comprises an indication that the object does not intend to move out of the vehicle trajectory,
wherein the likelihood that the object will continue to at least partially block the vehicle trajectory is based at least in part on the indication.

12. The method as any one of claims 6-11 recite, wherein controlling the vehicle comprises determining an action for the vehicle to take, wherein the action comprises at least one of:
maintaining a stopped position in the vehicle trajectory; or
determining a second vehicle trajectory around the object; and
wherein the action is determined based at least in part on at least one of:
a safety cost associated with the action, wherein the safety cost is based at least in part on a relative state between the object and the vehicle;
a comfort cost associated with the action, wherein the comfort cost is based at least in part on the relative state between the object and the vehicle;
a progress cost associated with the action, wherein the progress cost is based at least in part on a vehicle delay associated with the action; or
an operational rules cost associated with the action, wherein the operational rules cost is based at least in part on one or more regulations associated with the environment.

13. The method as any one of claims 6-12 recite, further comprising:
emitting at least one of an audio signal or a visual signal in a direction based at least in part on the current location of the object; and
performing at least one of:
based at least in part on determining that the current location of the object remains substantially the same, controlling the vehicle around the current location; or
based at least in part on determining a change in the location of the object to a second location that does not at least partially block the vehicle trajectory, controlling the vehicle according to the vehicle trajectory.

14. A computer-readable medium storing instructions that, when executed, cause one or more processors to perform a method as any one of claims 6-13 recite.

## Patentansprüche

1. Fahrzeug, das Folgendes umfasst:
einen Sensor;
einen oder mehrere Prozessoren; und
einen Speicher, der prozessorausführbare Anweisungen speichert, die, wenn sie von dem einem oder den mehreren Prozessoren ausgeführt werden, das Fahrzeug zu Folgendem konfigurieren:
Empfangen von Sensordaten einer Umgebung von dem Sensor; Identifizieren eines Objekts an einem Ort in der Umgebung mindestens zum Teil basierend auf den Sensordaten, wobei das Objekt momentan eine mit dem Fahrzeug assoziierte erste Fahrzeugtrajektorie mindestens teilweise blockiert;
Bestimmen einer mit dem Objekt assoziierten vorhergesagten Objekttrajektorie;
Bestimmen, dass die vorhergesagte Objekttrajektorie eine Blockierung der ersten Fahrzeugtrajektorie angibt, die für mindestens einen vorbestimmten Schwellenwertzeitraum anhalten wird;
Bestimmen einer mit der vorhergesagten Objekttrajektorie assoziierten Konfidenz;
Bestimmen einer zweiten Fahrzeugtrajektorie mindestens zum Teil basierend auf der Konfidenz und der vorhergesagten Objekttrajektorie, die die Blockierung der ersten Fahrzeugtrajektorie angibt, die für mindestens den vorbestimmten Schwellenwertzeitraum anhalten wird, wobei die zweite Fahrzeugtrajektorie mit dem um das Objekt herum navigierenden Fahrzeug assoziiert ist; und Steuern des Fahrzeugs gemäß der zweiten Fahrzeugtrajektorie.

2. Fahrzeug nach Anspruch 1, wobei die Anweisungen das Fahrzeug ferner zu Folgendem konfigurieren:
Bestimmen eines ersten Abstands zwischen einer Fahrbahnmarkierung, die einen Rand einer Fahrspur abbildet, und dem mit dem Objekt assoziierten Ort;
Bestimmen eines zweiten Abstands, der den ersten Abstand minus eine Breite des Fahrzeugs umfasst; und
Bestimmen einer mit dem Abstand assoziierten Fahrzeuggeschwindigkeit;
wobei die zweite Fahrzeugtrajektorie mit dem Navigieren um das Objekt herum in dem Abstand und bei der Fahrzeuggeschwindigkeit assoziiert ist.

3. Fahrzeug nach entweder Anspruch 1 oder Anspruch 2, wobei die Anweisungen das Fahrzeug ferner zu Folgendem konfigurieren:
Bestimmen einer mit dem Objekt assoziierten Klassifizierung; und
Bestimmen eines Schwellenwertabstands zwischen dem Fahrzeug und dem mit dem Objekt assoziierten Ort mindestens zum Teil basierend auf der Klassifizierung,
wobei die zweite Fahrzeugtrajektorie mindestens zum Teil auf dem Schwellenwertabstand basiert.

4. Fahrzeug nach einem der Ansprüche 1-3, wobei die Anweisungen das Fahrzeug ferner zu Folgendem konfigurieren:
Aussenden mindestens eines von einem akustischen Signal oder einem visuellen Signal in einer mit dem Objekt assoziierten Richtung; und
Bestimmen, dass eine Bewegung des Objekts mit der vorhergesagten Objekttrajektorie übereinstimmt;
wobei das Bestimmen der zweiten Fahrzeugtrajektorie mindestens zum Teil auf dem Bestimmen basiert, dass die Bewegung des Objekts mit der vorhergesagten Objekttrajektorie übereinstimmt.

5. Fahrzeug nach einem der Ansprüche 1-4, wobei die vorhergesagte Objekttrajektorie mindestens zum Teil auf mindestens einem von Folgendem basiert:
einem maschinell gelernten Algorithmus;
einer Top-Down-Darstellung der Umgebung;
einer diskretisierten Wahrscheinlichkeitsverteilung;
einer Zeitlogikformel; oder
einem Baumsuchverfahren.

6. Verfahren, das Folgendes umfasst:
Identifizieren eines Objekts an einem momentanen Ort in einer Umgebung mindestens zum Teil basierend auf Sensordaten;
Bestimmen, dass der momentane Ort mit einer Fahrzeugtrajektorie assoziiert ist, mindestens zum Teil basierend auf einer Bestimmung, dass ein sich auf der Fahrzeugtrajektorie fortbewegendes Fahrzeug den momentanen Ort mindestens teilweise passieren würde;
Bestimmen, mindestens zum Teil basierend darauf, dass der momentane Ort mit der Fahrzeugtrajektorie assoziiert ist, dass das Objekt die Fahrzeugtrajektorie mindestens teilweise blockiert;
Bestimmen einer Wahrscheinlichkeit, dass das Objekt die Fahrzeugtrajektorie mindestens teilweise weiter blockieren wird;
Steuern des Fahrzeugs mindestens zum Teil basierend auf der Wahrscheinlichkeit, dass das Objekt die Fahrzeugtrajektorie mindestens teilweise weiter blockieren wird;
wobei das Bestimmen der Wahrscheinlichkeit, dass das Objekt die Fahrzeugtrajektorie mindestens teilweise weiter blockieren wird, Folgendes umfasst:
Bestimmen einer Objekttrajektorie; und
Bestimmen, mindestens zum Teil basierend auf der Objekttrajektorie, dass das Objekt im Wesentlichen an dem momentanen Ort, der mit der Fahrzeugtrajektorie assoziiert ist, bleiben und die Vorwärtsbewegung des sich auf der Fahrzeugtrajektorie fortbewegenden Fahrzeugs für mindestens eine vorbestimmte Schwellenwertzeit weiter behindern wird.

7. Verfahren nach Anspruch 6, wobei die Fahrzeugtrajektorie eine erste Fahrzeugtrajektorie ist und wobei das Bestimmen, dass das Objekt die Fahrzeugtrajektorie mindestens teilweise blockiert, mindestens zum Teil auf dem Bestimmen basiert, dass das Objekt die Vorwärtsbewegung des Fahrzeugs entlang der ersten Fahrzeugtrajektorie behindert, wobei das Verfahren ferner Folgendes umfasst:
Bestimmen eines Schwellenwertabstands zum Navigieren um das Objekt herum; und
Bestimmen einer zweiten Fahrzeugtrajektorie mindestens zum Teil basierend auf dem Schwellenwertabstand,
wobei das Steuern des Fahrzeugs Bewirken umfasst, dass das Fahrzeug die Umgebung mindestens zum Teil basierend auf der zweiten Fahrzeugtrajektorie durchquert.

8. Verfahren nach einem der Ansprüche 6-7, wobei das Steuern des Fahrzeugs Bewirken umfasst, dass das Fahrzeug um das Objekt gemäß einer zweiten Fahrzeugtrajektorie herumfährt, wobei das Verfahren ferner Folgendes umfasst:
Identifizieren eines zweiten Objekts mindestens zum Teil basierend auf den Sensordaten;
Bestimmen einer mit dem zweiten Objekt assoziierten zweiten Objekttrajektorie;
Bestimmen einer Kreuzung zwischen der zweiten Objekttrajektorie und der zweiten Fahrzeugtrajektorie;
Steuern des Fahrzeugs mindestens zum Teil basierend auf der Kreuzung.

9. Verfahren nach einem der Ansprüche 6-8, wobei der momentane Ort des Objekts ein erster Ort des Objekts ist, wobei das Verfahren ferner Folgendes umfasst:
Bestimmen eines zweiten Orts des Objekts;
Bestimmen, dass der zweite Ort des Objekts die Vorwärtsbewegung des sich auf der Fahrzeugtrajektorie fortbewegenden Fahrzeugs nicht behindert;
Bestimmen, mindestens zum Teil basierend darauf, dass der zweite Ort des Objekts die Vorwärtsbewegung des Fahrzeugs nicht behindert, dass das Objekt die Fahrzeugtrajektorie nicht mindestens teilweise blockiert; und
Steuern des Fahrzeugs gemäß der Fahrzeugtrajektorie.

10. Verfahren nach einem der Ansprüche 6-9, wobei die Wahrscheinlichkeit, dass das Objekt die Fahrzeugtrajektorie weiter blockieren wird, mindestens zum Teil auf mindestens einem von Folgendem basiert:
einer Klassifizierung des Objekts;
einer Position des Objekts;
dem momentanen Ort des Objekts in der Umgebung;
einer Größe des Objekts;
einem mit dem Objekt assoziierten Stabilitätsniveau;
einer Geschwindigkeit des Objekts; oder
einer Änderung der Geschwindigkeit des Objekts.

11. Verfahren nach einem der Ansprüche 6-10, das ferner Folgendes umfasst:
Empfangen mindestens eines von einem akustischen Signal über ein Mikrofon oder einem visuellen Signal über eine Kamera; und
Bestimmen, dass das mindestens eine von dem akustischen Signal oder dem visuellen Signal eine Angabe umfasst, dass das Objekt nicht intendiert, sich aus der Fahrzeugtrajektorie zu bewegen,
wobei die Wahrscheinlichkeit, dass das Objekt die Fahrzeugtrajektorie mindestens teilweise weiter blockieren wird, mindestens zum Teil auf der Angabe basiert.

12. Verfahren nach einem der Ansprüche 6-11, wobei das Steuern des Fahrzeugs Bestimmen einer durchzuführenden Aktion für das Fahrzeug umfasst, wobei die Aktion mindestens eines von Folgendem umfasst:
Beibehalten einer Anhalteposition in der Fahrzeugtrajektorie; oder
Bestimmen einer zweiten Fahrzeugtrajektorie um das Objekt herum; und
wobei die Aktion mindestens zum Teil basierend auf mindestens einem von Folgendem bestimmt wird:
mit der Aktion assoziierten Sicherheitskosten, wobei die Sicherheitskosten mindestens zum Teil auf einem relativen Zustand zwischen dem Objekt und dem Fahrzeug basieren;
mit der Aktion assoziierten Komfortkosten, wobei die Komfortkosten mindestens zum Teil auf dem relativen Zustand zwischen dem Objekt und dem Fahrzeug basieren;
mit der Aktion assoziierten Fortschrittskosten, wobei die Fortschrittskosten mindestens zum Teil auf einer mit der Aktion assoziierten Fahrzeugverzögerung basieren; oder
mit der Aktion assoziierten Betriebsvorschriftskosten, wobei die Betriebsvorschriftskosten mindestens zum Teil auf einer oder mehreren mit der Umgebung assoziierten Regelungen basieren.

13. Verfahren nach einem der Ansprüche 6-12, das ferner Folgendes umfasst:
Aussenden mindestens eines von einem akustischen Signal oder einem visuellen Signal in einer Richtung mindestens zum Teil basierend auf dem momentanen Ort des Objekts; und
Durchführen von mindestens einem von Folgendem:
mindestens zum Teil basierend auf dem Bestimmen, dass der momentane Ort des Objekts im Wesentlichen gleich bleibt, Steuern des Fahrzeugs um den momentanen Ort herum; oder
mindestens zum Teil basierend auf dem Bestimmen einer Änderung des Orts des Objekts in einen zweiten Ort, der die Fahrzeugtrajektorie nicht mindestens teilweise blockiert, Steuern des Fahrzeugs gemäß der Fahrzeugtrajektorie.

14. Computerlesbares Medium, das Anweisungen speichert, die, wenn sie ausgeführt werden, bewirken, dass ein oder mehrere Prozessoren ein Verfahren nach einem der Ansprüche 6-13 durchführen.

## Revendications

1. Véhicule comprenant :
un capteur ;
un ou plusieurs processeurs ; et
une mémoire stockant des instructions exécutables par processeur qui, lorsqu'elles sont exécutées par le ou les processeurs, configurent le véhicule pour :
recevoir, en provenance du capteur, des données de capteur d'un environnement ;
identifier un objet à un emplacement dans l'environnement au moins en partie d'après les données de capteur, l'objet bloquant actuellement, au moins partiellement, une première trajectoire de véhicule associée au véhicule ;
déterminer une trajectoire prédite d'objet associée à l'objet ;
déterminer que la trajectoire prédite d'objet indique un blocage de la première trajectoire de véhicule qui va se poursuivre pendant au moins une période seuil prédéterminée ;
déterminer une confiance associée à la trajectoire prédite d'objet ;
déterminer une seconde trajectoire de véhicule sur la base, au moins en partie, de la confiance et de la trajectoire d'objet prédite indiquant le blocage de la première trajectoire de véhicule qui va se poursuivre pendant au moins la période seuil prédéterminée, la seconde trajectoire de véhicule étant associée au fait que le véhicule navigue autour de l'objet ; et
commander le véhicule selon la seconde trajectoire de véhicule.

2. Véhicule selon la revendication 1, les instructions configurant en outre le véhicule pour :
déterminer une première distance entre un marqueur de voie représentant un bord d'une voie et l'emplacement associé à l'objet ;
déterminer une deuxième distance comprenant la première distance moins une largeur du véhicule ; et
déterminer une vitesse du véhicule associée à la distance ;
la seconde trajectoire de véhicule étant associée à la navigation autour de l'objet à la distance et à la vitesse du véhicule.

3. Véhicule selon la revendication 1 ou la revendication 2, les instructions configurant en outre le véhicule pour :
déterminer une classification associée à l'objet ; et
déterminer une distance seuil entre le véhicule et l'emplacement associé à l'objet en se basant au moins en partie sur la classification,
la seconde trajectoire de véhicule étant basée au moins en partie sur la distance seuil.

4. Véhicule selon l'une quelconque des revendications 1 à 3, les instructions configurant en outre le véhicule pour :
émettre un signal audio et/ou un signal visuel dans une direction associée à l'objet ; et
déterminer qu'un mouvement de l'objet est conforme à la trajectoire prédite d'objet ;
la détermination de la seconde trajectoire de véhicule étant basée au moins en partie sur la détermination du fait que le mouvement de l'objet est conforme à la trajectoire d'objet prédite.

5. Véhicule selon l'une quelconque des revendications 1 à 4, la trajectoire d'objet prédite étant basée au moins en partie sur au moins un élément parmi :
un algorithme issu d'un apprentissage automatique ;
une représentation descendante de l'environnement ;
une distribution de probabilité discrétisée ;
une formule logique temporelle ; ou
une méthode de recherche arborescente.

6. Procédé comprenant :
l'identification d'un objet à un emplacement actuel dans un environnement au moins en partie d'après des données de capteur ;
le fait de déterminer que l'emplacement actuel est associé à une trajectoire de véhicule sur la base, au moins en partie, d'une détermination selon laquelle un véhicule circulant sur la trajectoire de véhicule passerait au moins partiellement par l'emplacement actuel ;
le fait de déterminer, au moins en partie sur la base du fait que l'emplacement actuel est associé à la trajectoire de véhicule, que l'objet bloque au moins partiellement la trajectoire de véhicule ;
la détermination d'une probabilité que l'objet continue de bloquer au moins partiellement la trajectoire de véhicule ;
la commande du véhicule sur la base, au moins en partie, de la probabilité que l'objet continue à bloquer au moins partiellement la trajectoire de véhicule ;
la détermination de la probabilité que l'objet continue de bloquer au moins partiellement la trajectoire de véhicule comprenant :
la détermination d'une trajectoire d'objet ; et
le fait de déterminer, au moins en partie sur la base de la trajectoire de l'objet, que l'objet restera sensiblement à l'emplacement actuel associé à la trajectoire de véhicule et qu'il continuera d'entraver la progression du véhicule sur la trajectoire de véhicule pendant au moins une durée seuil prédéterminée.

7. Procédé selon la revendication 6, la trajectoire de véhicule étant une première trajectoire de véhicule et la détermination selon laquelle l'objet bloque au moins partiellement la trajectoire de véhicule étant basée au moins en partie sur la détermination du fait que l'objet entrave la progression du véhicule le long de la première trajectoire de véhicule, le procédé comprenant en outre :
la détermination d'une distance seuil pour naviguer autour de l'objet ; et
la détermination d'une seconde trajectoire de véhicule au moins en partie sur la base de la distance seuil,
la commande du véhicule comprenant le fait d'amener le véhicule à parcourir l'environnement sur la base, au moins en partie, de la seconde trajectoire de véhicule.

8. Procédé selon l'une quelconque des revendications 6 à 7, la commande du véhicule comprenant le fait d'amener le véhicule à contourner l'objet selon une seconde trajectoire de véhicule, le procédé comprenant en outre :
l'identification d'un second objet au moins en partie d'après les données de capteur ;
la détermination d'une seconde trajectoire d'objet associée au second objet ;
la détermination d'une intersection entre la seconde trajectoire d'objet et la seconde trajectoire de véhicule ;
la commande du véhicule au moins en partie sur la base de l'intersection.

9. Procédé selon l'une quelconque des revendications 6 à 8, l'emplacement actuel de l'objet étant premier emplacement de l'objet, le procédé comprenant en outre :
la détermination d'un second emplacement de l'objet ;
le fait de déterminer que le second emplacement de l'objet n'entrave pas la progression du véhicule circulant sur la trajectoire de véhicule ;
le fait de déterminer, au moins en partie sur la base du fait que le second emplacement de l'objet ne gêne pas la progression du véhicule, que l'objet ne bloque pas au moins partiellement la trajectoire de véhicule ; et
la commande du véhicule selon la trajectoire de véhicule.

10. Procédé selon l'une quelconque des revendications 6 à 9, la probabilité que l'objet continue à bloquer la trajectoire de véhicule étant basée au moins en partie sur au moins un élément parmi :
une classification de l'objet ;
une position de l'objet ;
l'emplacement actuel de l'objet dans l'environnement ;
une taille de l'objet ;
un niveau de stabilité associé à l'objet ;
une vitesse de l'objet ; ou
une modification de la vitesse de l'objet.

11. Procédé selon l'une quelconque des revendications 6 à 10, comprenant en outre :
la réception d'un signal audio via un microphone et/ou d'un signal visuel via une caméra ; et
Le fait de déterminer que le signal audio et/ou le signal visuel comprennent une indication selon laquelle l'objet n'a pas l'intention de s'écarter de la trajectoire de véhicule,
la probabilité que l'objet continue à bloquer au moins partiellement la trajectoire de véhicule étant basée au moins en partie sur l'indication.

12. Procédé selon l'une quelconque des revendications 6 à 11, la commande du véhicule comprenant la détermination d'une action que le véhicule doit exécuter, l'action comprenant au moins une action parmi :
le maintien d'une position d'arrêt dans la trajectoire de véhicule ; ou
la détermination d'une seconde trajectoire de véhicule autour de l'objet ; et
l'action étant déterminée au moins en partie sur la base d'au moins un élément parmi :
un coût de sécurité associé à l'action, le coût de sécurité étant basé au moins en partie sur un état relatif entre l'objet et le véhicule ;
un coût de confort associé à l'action, le coût de confort étant basé au moins en partie sur l'état relatif entre l'objet et le véhicule ;
un coût de progression associé à l'action, le coût de progression étant basé au moins en partie sur un retard de véhicule associé à l'action ; ou
un coût de règles opérationnelles associé à l'action, le coût de règles opérationnelles étant basé au moins en partie sur une ou plusieurs réglementations associées à l'environnement.

13. Procédé selon l'une quelconque des revendications 6 à 12, comprenant en outre :
l'émission d'un signal audio et/ou d'un signal visuel dans une direction basée au moins en partie sur l'emplacement actuel de l'objet ; et
effectuer au moins une action parmi celles consistant :
en se basant au moins en partie sur la détermination selon laquelle l'emplacement actuel de l'objet reste sensiblement le même, à commander le véhicule autour de l'emplacement actuel ; ou
en se basant au moins en partie sur la détermination d'un changement dans l'emplacement de l'objet vers un second emplacement qui ne bloque pas au moins partiellement la trajectoire de véhicule, à commander le véhicule selon la trajectoire de véhicule.

14. Support lisible par ordinateur stockant des instructions qui, lorsqu'elles sont exécutées, amènent un ou plusieurs processeurs à réaliser un procédé selon l'une quelconque des revendications 6 à 13.
